# EUROPEAN PATENT APPLICATION

(11) **EP 4 529 107 A1**
(43) Date of publication of application: **26.03.2025**
(21) Application number: 22947295.6
(22) Date of filing: 22.06.2022
(51) Int. Cl.: H04L 27/20, H04W 72/04

(54) **RANGING METHOD AND APPARATUS**

(71) Applicant: Huawei Technologies Co., Ltd., Shenzhen, Guangdong 518129 (CN)
(72) Inventor: LI, Dejian, Shenzhen, Guangdong 518129 (CN); GAO, Lei, Shenzhen, Guangdong 518129 (CN); CHENG, Xingqing, Shenzhen, Guangdong 518129 (CN)
(74) Representative: Huawei European IPR
(86) International application number: PCT/CN2022/100571
(87) International publication number: WO 2023/245518

(57) **Abstract**

This application discloses a ranging method, and an apparatus, applied to vehicle-mounted positioning and indoor positioning scenarios. The method may include: sending a first ranging frame on a first channel, where the first ranging frame carries first ranging information by using at least one first symbol; receiving a second ranging frame from a second node on the first channel, where the second ranging frame carries second ranging information by using at least one second symbol, to implement transmission of a ranging frame on the first channel; receiving first channel state information that is from the second node and that corresponds to the first channel; determining, based on the at least one second symbol, second channel state information corresponding to the first channel; and determining channel state information corresponding to the first channel based on the first channel state information and the second channel state information, where the channel state information corresponding to the first channel is used to measure a distance between a sender of the first ranging frame and the second node. This implements inter-node ranging on the first channel, and helps improve ranging precision.

## Description

### TECHNICAL FIELD

This application relates to the field of communication technologies, and in particular, to a ranging method, and an apparatus.

### BACKGROUND

With the continuous development of wireless communication technologies, smart application scenarios such as a smart home, a smart cockpit, smart driving, smart manufacturing, and smart transportation emerge. Based on the wireless communication technologies, wireless ranging and/or positioning may be implemented in aspects such as indoor positioning, passive entry passive start (passive entry passive start, PEPS), asset management, and logistics management.

A smart cockpit is used as an example. There are a plurality of communication domains in a vehicle, and one communication domain includes one master node and at least one slave node. The master node schedules a time-frequency resource of the slave node, to implement data transmission between nodes. For example, on a carrier (for example, a channel with a bandwidth of 20 MHz) that may be used by the master node, the master node may schedule the time-frequency resource for communication with the slave nodes.

Currently, a communication frame is defined for data transmission between nodes, but no ranging frame is defined for inter-node ranging (ranging). Therefore, how to implement inter-node ranging is an urgent technical problem to be resolved.

### SUMMARY

This application provides a ranging method, and an apparatus, to implement inter-node ranging, and help improve ranging precision.

According to a first aspect, this application provides a ranging method. The method may include: sending a first ranging frame on a first channel, where the first ranging frame carries first ranging information by using at least one first symbol; receiving a second ranging frame from a second node on the first channel, where the second ranging frame carries second ranging information by using at least one second symbol; receiving first channel state information, where the first channel state information is channel state information that is from the second node and that corresponds to the first channel; determining, based on the at least one second symbol, second channel state information corresponding to the first channel; and determining channel state information corresponding to the first channel based on the first channel state information and the second channel state information, where the channel state information corresponding to the first channel is used to measure a distance between a sender of the first ranging frame and the second node.

It can be learned that, transmission of a ranging frame can be performed on the first channel by sending the first ranging frame and receiving the second ranging frame on the first channel. The ranging frame carries ranging information by using at least one symbol. This can perform transmission of the ranging information. The channel state information corresponding to the first channel can be determined based on the first channel state information and the second channel state information that correspond to the first channel. This implements inter-node ranging on the first channel, and helps improve ranging precision.

Optionally, a frame structure of the first ranging frame is the same as a frame structure of the second ranging frame, so that ranging frames with a same frame structure are used on the first channel. This helps improve stability of transmission of the ranging frame.

In a possible implementation, the first ranging frame includes at least one first radio frame, and the second ranging frame includes at least one second radio frame.

Optional manner 1: Symbols in the at least one first radio frame are all used to carry the first ranging information, symbols in the at least one second radio frame are all used to carry the second ranging information, there is a switching gap between a first radio frame and a second radio frame, and the switching gap is used to perform receive/transmit switching. In Optional manner 1, the switching gap neither occupies duration of the first radio frame nor occupies duration of the second radio frame. This can reduce overheads. Symbols in the first radio frame are all used to carry the first ranging information, and symbols in the second radio frame are all used to carry the second ranging information. This increases a transmission amount of ranging information, and improves transmission efficiency and ranging accuracy. Optional manner 1 is applicable to a case in which the first channel is an initial channel or frequency hopping channel for frequency hopping ranging.

Optional manner 2: for any first radio frame of the at least one first radio frame, the first radio frame includes a switching gap, symbols except the switching gap are all used to carry the first ranging information, and the switching gap is temporally located after the symbols used to carry the first ranging information, that is, the switching gap occupies duration of one symbol in the first radio frame; and for any second radio frame of the at least one second radio frame, the second radio frame includes a switching gap, symbols except the switching gap are all used to carry the second ranging information, and the switching gap is temporally located after the symbols used to carry the second ranging information, that is, the switching gap occupies duration of one symbol in the second radio frame. The switching gap is used to perform receive/transmit switching. The switching gap in the first radio frame is temporally located after the symbols used to carry the first ranging information, and the switching gap in the second radio frame is temporally located after the symbols used to carry the second ranging information. This reduces an uplink/downlink switching gap and reduces overheads. Symbols except the switching gap are all used to carry ranging information. This increases a transmission amount of ranging information, and improves transmission efficiency and ranging accuracy. Optional manner 2 is applicable to a case in which the first channel is an initial channel or frequency hopping channel for frequency hopping ranging.

Optional manner 3: for any first radio frame of the at least one first radio frame, the first radio frame includes a switching gap, a first overhead symbol, and a first link symbol, and the first overhead symbol and the first link symbol are used to carry the first ranging information; and for any second radio frame of the at least one second radio frame, the second radio frame includes a switching gap, a second overhead symbol, and a second link symbol, and the second overhead symbol and the second link symbol are used to carry the second ranging information. The switching gap is used to perform receive/transmit switching. The first link symbol is a link symbol sent to the second node, and the second link symbol is a link symbol sent by the second node. Optional manner 3 may be compatible with a radio frame including a switching gap, an overhead symbol, and a link symbol. This increases a transmission amount of ranging information, and improves transmission efficiency and ranging accuracy. Optional manner 3 is applicable to a case in which the first channel is an initial channel for frequency hopping ranging.

A quantity of switching gaps included in the first radio frame and/or the second radio frame is 2; and further, the first radio frame further includes at least one second link symbol, and/or the second radio frame further includes at least one first link symbol. This can implement parallel transmission of ranging information and data. The first link symbol and the second link symbol are used to carry information in different transmission directions.

Optionally, the method further includes: sending a first bitmap, where the first bitmap indicates a first radio frame in one superframe, so that the second node determines specific radio frames in one superframe are first radio frames. Optionally, the first bitmap is a 48-bit bitmap, and a value of one bit indicates whether a radio frame corresponding to the bit is a first radio frame.

Optionally, the first bitmap may be carried in first configuration information sent to the second node, and the first configuration information may further include a quantity L1 of superframes and/or first indication information, where L1 is a positive integer. The quantity of superframes is L1, that is, there are L1 superframes, and the L1 superframes are continuous in time domain. Each of the L1 superframes includes a first ranging frame, and the second node may determine, based on the quantity L1 of superframes and the first bitmap, a time-frequency resource for transmitting the first ranging frame.

The first indication information indicates whether a first bitmap corresponding to each of the L1 superframes is the same. If the first indication information indicates that the first bitmap corresponding to each of the L1 superframes is the same, the first configuration information may include one first bitmap, and the first bitmap is applicable to each of the L1 superframes, so that the second node can determine, based on the first bitmap and the L1 superframes, a time-frequency resource for transmitting the first ranging frame. Alternatively, if the first indication information indicates that the first bitmap corresponding to each of the L1 superframes is different, the first configuration information may include a maximum of L1 first bitmaps, so that the second node can separately determine, based on the first bitmap corresponding to each of the L1 superframes, a time-frequency resource for transmitting the first ranging frame.

Optionally, for a last first radio frame in the at least one first radio frame, last N symbols that are included in the last first radio frame and that are used to carry the first ranging information are inverse to other symbols that are in the last first radio frame and that are used to carry the first ranging information, the last first radio frame indicates channel switching, and N is a positive integer; and/or
for a last second radio frame in the at least one second radio frame, last M symbols that are included in the last second radio frame and that are used to carry the second ranging information are inverse to other symbols that are in the last second radio frame and that are used to carry the second ranging information, the last second radio frame indicates channel switching, and M is a positive integer.

It can be learned that the last first radio frame and/or the last second radio frame may indicate channel switching. This performs frequency hopping from the first channel to another channel, and facilitates ranging interaction on the another channel.

In another possible implementation, the first ranging frame includes at least one first overhead symbol, the at least one first overhead symbol is all or part of overhead symbols in at least one first radio frame, and the at least one first overhead symbol is used to carry the first ranging information; and the second ranging frame includes at least one second overhead symbol, the at least one second overhead symbol is all or part of overhead symbols in at least one second radio frame, and the at least one second overhead symbol is used to carry the second ranging information. This manner may be compatible with a radio frame including an overhead symbol and a link symbol, and the overhead symbol is used to carry ranging information. This improves utilization of the overhead symbol. This manner is applicable to a case in which the first channel is an initial channel for frequency hopping ranging.

Optionally, the at least one first overhead symbol is the part of overhead symbols in the at least one first radio frame, and at least one third overhead symbol in the at least one first radio frame is a first link system overhead symbol or a second link system overhead symbol; and the at least one second overhead symbol is the part of overhead symbols in the at least one second radio frame, and at least one fourth overhead symbol in the at least one second radio frame is a first link system overhead symbol or a second link system overhead symbol. The first link system overhead symbol and the second link system overhead symbol are used to ensure data communication. Some overhead symbols in the at least one first radio frame are used to carry ranging information, and the other overhead symbols are used to ensure data communication. This can implement parallel transmission of the ranging information and data.

Further, a first overhead symbol and a third overhead symbol in a same first radio frame may be arranged in a comb manner, where the comb manner may maintain synchronization performance of a communication system, and this improves ranging precision based on synchronization precision of a communication symbol while ensuring communication performance of the communication system; and/or a second overhead symbol and a fourth overhead symbol in a same second radio frame may be arranged in a comb manner, where the comb manner may maintain synchronization performance of a communication system, and this improves ranging precision based on synchronization precision of a communication symbol while ensuring communication performance of the communication system.

Optionally, the at least one first overhead symbol is all the overhead symbols in the at least one first radio frame, and the at least one second overhead symbol is all the overhead symbols in the at least one second radio frame. This helps expand an estimation range of a Doppler (Doppler) frequency shift, and is applicable to ranging in a high-speed moving scenario.

Optionally, on the first channel, a difference between a quantity of symbols that are in the first ranging frame and that are used to carry the first ranging information and a quantity of symbols that are in the second ranging frame and that are used to carry the second ranging information is less than a first threshold, so that a signal-to-noise ratio (signal-to-noise ratio, SNR) for determining the first channel state information is the same as or similar to an SNR for determining the second channel state information. This obtains the first channel state information and the second channel state information that have same or similar accuracy, and determines, based on the first channel state information and the second channel state information, channel state information that corresponds to the first channel and that has higher accuracy.

Optionally, the method further includes: sending a second bitmap, where the second bitmap indicates an overhead symbol that is in one superframe and that is used to carry the first ranging information, so that the second node determines specific overhead symbols, in the superframe, carrying the first ranging information. Optionally, the second bitmap is a 96-bit bitmap, and a value of one bit indicates whether an overhead symbol corresponding to the bit carries the first ranging information.

Optionally, last X first overhead symbols in the at least one first overhead symbol are inverse to other first overhead symbols used to carry the first ranging information, the last X inverse symbols indicate channel switching, to implement frequency hopping from the first channel to another channel, and facilitate ranging interaction on the another channel, and X is a positive integer; and/or
last Y second overhead symbols in the at least one second overhead symbol are inverse to other second overhead symbols used to carry the second ranging information, the last Y inverse second overhead symbols indicate channel switching, to implement frequency hopping from the first channel to another channel, and facilitate ranging interaction on the another channel, and Y is a positive integer.

Optionally, in one superframe, a number of a 1st first radio frame included in the first ranging frame is greater than K, overhead symbols in a 1st radio frame to a radio frame numbered K in the superframe are used to perform control information transmission, and K is a positive integer greater than 1. The overhead symbol used to perform control information transmission is not used for ranging, that is, does not carry the ranging information.

In a possible implementation, the method further includes: receiving P third ranging frames from P third nodes on the first channel, where the third ranging frame carries the second ranging information by using the at least one second symbol, a frame structure of the third ranging frame is the same as a frame structure of the second ranging frame, and P is a positive integer. A node type of the third node is the same as a node type of the second node. In other words, the first ranging frame is broadcast on the first channel, and a plurality of second ranging frames from a plurality of second nodes are received. This implements multicast ranging interaction on the first channel.

Further, an order of the P third ranging frames and the second ranging frame in time domain meets a preset setting, that is, the plurality of second nodes send the second ranging frames in a preset order.

In a possible implementation, the method further includes: sending a fourth ranging frame on a second channel based on first information indicating channel switching, where the fourth ranging frame carries the first ranging information by using the at least one first symbol, and a frame structure of the fourth ranging frame is the same as or different from a frame structure of the first ranging frame, that is, a frame structure of a ranging frame transmitted on the first channel may be the same as or different from a frame structure of a ranging frame transmitted on the second channel; receiving a fifth ranging frame from the second node on the second channel, where the fifth ranging frame carries the second ranging information by using the at least one second symbol, and a frame structure of the fifth ranging frame is the same as the frame structure of the fourth ranging frame; receiving third channel state information, where the third channel state information is channel state information that is from the second node and that corresponds to the second channel; determining, based on the fifth ranging frame, fourth channel state information corresponding to the second channel; and determining channel state information corresponding to the second channel based on the third channel state information and the fourth channel state information, where the channel state information corresponding to the second channel is used to measure a distance between a sender of the fourth ranging frame and the second node. This implements inter-node ranging on the second channel. It can be learned that ranging accuracy and precision can be improved through frequency hopping.

Further, the method further includes: determining the distance between the sender of the first ranging frame and the second node based on the channel state information corresponding to the first channel and the channel state information corresponding to the second channel. That is, the distance between the sender of the first ranging frame and the second node is determined based on channel state information corresponding to a plurality of frequency hopping ranging channels (including an initial channel for frequency hopping ranging and a frequency hopping channel for frequency hopping ranging), so that the obtained distance has high accuracy and precision. Further, the method further includes: sending the distance between the sender of the first ranging frame and the second node to the second node, so that the second node learns of the distance to the sender of the first ranging frame.

Optionally, the method further includes: sending second information, where the second information indicates a quantity of fourth ranging frames that are temporally continuously transmitted and/or a quantity of fifth ranging frames that are temporally continuously transmitted. This continuously transmits a ranging frame on a frequency hopping channel for frequency hopping ranging, and helps improve ranging accuracy and precision.

Optionally, a difference between a quantity of symbols that are included in the fourth ranging frame and that are used to carry the first ranging information and a quantity of symbols that are included in the first ranging frame and that are used to carry the first ranging information is less than a second threshold, and/or a difference between a quantity of symbols that are included in the fifth ranging frame and that are used to carry the second ranging information and a quantity of symbols that are included in the second ranging frame and that are used to carry the second ranging information is less than a second threshold, so that channel state information keeps a same or similar SNR on different channels.

Optionally, the method provided in the first aspect may be performed by a first node, or may be performed by a module in a first node, for example, performed by a chip in a first node.

According to a second aspect, this application provides a ranging method. The method may include: receiving a first ranging frame from a first node on a first channel, where the first ranging frame carries first ranging information by using at least one first symbol; sending a second ranging frame to the first node on the first channel, where the second ranging frame carries second ranging information by using at least one second symbol; determining, based on the at least one first symbol, first channel state information corresponding to the first channel; and sending the first channel state information to the first node, where the first channel state information is used to measure a distance between the first node and a receiver of the first ranging frame.

It can be learned that, transmission of a ranging frame can be performed on the first channel by receiving the first ranging frame and sending the second ranging frame on the first channel. The ranging frame carries ranging information by using at least one symbol. This can perform transmission of the ranging information. The first channel state information is sent to the first node, so that the first node determines the channel state information corresponding to the first channel. This implements inter-node ranging on the first channel, and helps improve ranging precision.

Optionally, a frame structure of the first ranging frame is the same as a frame structure of the second ranging frame, so that ranging frames with a same frame structure are used on the first channel. This helps improve stability of transmission of the ranging frame.

In a possible implementation, the first ranging frame includes at least one first radio frame, and the second ranging frame includes at least one second radio frame.

Optional manner 1: Symbols in the at least one first radio frame are all used to carry the first ranging information, symbols in the at least one second radio frame are all used to carry the second ranging information, there is a switching gap between a first radio frame and a second radio frame, and the switching gap is used to perform receive/transmit switching. In this manner, the switching gap neither occupies duration of the first radio frame nor occupies duration of the second radio frame. This can reduce overheads. Symbols in the first radio frame are all used to carry the first ranging information, and symbols in the second radio frame are all used to carry the second ranging information. This increases a transmission amount of ranging information, and improves transmission efficiency and ranging accuracy. Optional manner 1 is applicable to a case in which the first channel is an initial channel or frequency hopping channel for frequency hopping ranging.

Optional manner 2: for any first radio frame of the at least one first radio frame, the first radio frame includes a switching gap, symbols except the switching gap are all used to carry the first ranging information, and the switching gap is temporally located after the symbols used to carry the first ranging information, that is, the switching gap occupies duration of one symbol in the first radio frame; and for any second radio frame of the at least one second radio frame, the second radio frame includes a switching gap, symbols except the switching gap are all used to carry the second ranging information, and the switching gap is temporally located after the symbols used to carry the second ranging information, that is, the switching gap occupies the second radio frame. The switching gap is used to perform receive/transmit switching. The switching gap in the first radio frame is temporally located after the symbols used to carry the first ranging information, and the switching gap in the second radio frame is temporally located after the symbols used to carry the second ranging information. This reduces a quantity of switching gaps, and reduces overheads. Symbols except the switching gap are all used to carry ranging information. This increases a transmission amount of ranging information, and improves transmission efficiency and ranging accuracy. Optional manner 2 is applicable to a case in which the first channel is an initial channel or frequency hopping channel for frequency hopping ranging.

Optional manner 3: for any first radio frame of the at least one first radio frame, the first radio frame includes a switching gap, a first overhead symbol, and a first link symbol, and the first overhead symbol and the first link symbol are used to carry the first ranging information; and for any second radio frame of the at least one second radio frame, the second radio frame includes a switching gap, a second overhead symbol, and a second link symbol, and the second overhead symbol and the second link symbol are used to carry the second ranging information. The switching gap is used to perform receive/transmit switching. The first link symbol is a link symbol sent to the second node, and the second link symbol is a link symbol sent by the second node. Optional manner 3 may be compatible with a radio frame including a switching gap, an overhead symbol, and a link symbol. This increases a transmission amount of ranging information, and improves transmission efficiency and ranging accuracy. Optional manner 3 is applicable to a case in which the first channel is an initial channel for frequency hopping ranging.

A quantity of switching gaps included in the first radio frame and/or the second radio frame is 2; and further, the first radio frame further includes at least one second link symbol, and/or the second radio frame further includes at least one first link symbol. This can implement parallel transmission of ranging information and data.

Optionally, the method further includes: receiving a first bitmap, where the first bitmap indicates a first radio frame in one superframe. This determines a first radio frame in one superframe. Optionally, the first bitmap is a 48-bit bitmap, and a value of one bit indicates whether a radio frame corresponding to the bit is a first radio frame.

Optionally, the first bitmap may be carried in first configuration information sent by the first node, and the first configuration information may further include a quantity L1 of superframes and/or first indication information, where L1 is a positive integer. The quantity of superframes is L1, that is, there are L1 superframes, and the L1 superframes are continuous in time domain. Each of the L1 superframes includes a first ranging frame, so as to determine, based on the quantity L1 of superframes and the first bitmap, a time-frequency resource for transmitting the first ranging frame.

The first indication information indicates whether a first bitmap corresponding to each of the L1 superframes is the same. If the first indication information indicates that the first bitmap corresponding to each of the L1 superframes is the same, the first configuration information may include one first bitmap, and the first bitmap is applicable to each of the L1 superframes, so that a time-frequency resource for transmitting the first ranging frame can be determined based on the first bitmap and the L1 superframes. Alternatively, if the first indication information indicates that the first bitmap corresponding to each of the L1 superframes is different, the first configuration information may include a maximum of L1 first bitmaps, so that a time-frequency resource for transmitting the first ranging frame can be separately determined based on the first bitmap corresponding to each of the L1 superframes.

Optionally, for a last first radio frame in the at least one first radio frame, last N symbols that are included in the last first radio frame and that are used to carry the first ranging information are inverse to other symbols that are in the last first radio frame and that are used to carry the first ranging information, the last first radio frame indicates channel switching, and N is a positive integer; and/or
for a last second radio frame in the at least one second radio frame, last M symbols that are included in the last second radio frame and that are used to carry the second ranging information are inverse to other symbols that are in the last second radio frame and that are used to carry the second ranging information, the last second radio frame indicates channel switching, and M is a positive integer.

It can be learned that the last first radio frame and/or the last second radio frame may indicate channel switching. This performs frequency hopping from the first channel to another channel, and facilitates ranging interaction on the another channel.

In another possible implementation, the first ranging frame includes at least one first overhead symbol, the at least one first overhead symbol is all or part of overhead symbols in at least one first radio frame, and the at least one first overhead symbol is used to carry the first ranging information; and the second ranging frame includes at least one second overhead symbol, the at least one second overhead symbol is all or part of overhead symbols in at least one second radio frame, and the at least one second overhead symbol is used to carry the second ranging information. This manner may be compatible with a radio frame including an overhead symbol and a link symbol, and the overhead symbol is used to carry ranging information. This improves utilization of the overhead symbol. This manner is applicable to a case in which the first channel is an initial channel for frequency hopping ranging.

Optionally, the at least one first overhead symbol is the part of overhead symbols in the at least one first radio frame, and at least one third overhead symbol in the at least one first radio frame is a first link system overhead symbol or a second link system overhead symbol; and the at least one second overhead symbol is the part of overhead symbols in the at least one second radio frame, and at least one fourth overhead symbol in the at least one second radio frame is a first link system overhead symbol or a second link system overhead symbol. The first link system overhead symbol and the second link system overhead symbol are used to ensure data communication. Some overhead symbols in the at least one first radio frame are used to carry ranging information, and the other overhead symbols are used to ensure data communication. This can implement parallel transmission of the ranging information and data.

Further, a first overhead symbol and a third overhead symbol in a same first radio frame may be arranged in a comb manner, where the comb manner may maintain synchronization performance of a communication system, and this improves ranging precision based on synchronization precision of a communication symbol while ensuring communication performance of the communication system; and/or a second overhead symbol and a fourth overhead symbol in a same second radio frame may be arranged in a comb manner, where the comb manner may maintain synchronization performance of a communication system, and this improves ranging precision based on synchronization precision of a communication symbol while ensuring communication performance of the communication system.

Optionally, the at least one first overhead symbol is all the overhead symbols in the at least one first radio frame, and the at least one second overhead symbol is all the overhead symbols in the at least one second radio frame. This helps expand an estimation range of a Doppler (Doppler) frequency shift, and is applicable to ranging in a high-speed moving scenario.

Optionally, on the first channel, a difference between a quantity of symbols that are in the first ranging frame and that are used to carry the first ranging information and a quantity of symbols that are in the second ranging frame and that are used to carry the second ranging information is less than a first threshold, so that an SNR for determining the first channel state information is the same as or similar to an SNR for determining the second channel state information. This obtains the first channel state information and the second channel state information that have same or similar accuracy, and determines, based on the first channel state information and the second channel state information, channel state information that corresponds to the first channel and that has higher accuracy.

Optionally, the method further includes: receiving a second bitmap, where the second bitmap indicates an overhead symbol that is in one superframe and that is used to carry the first ranging information, so that overhead symbols, in the superframe, carrying the first ranging information are determined. Optionally, the second bitmap is a 96-bit bitmap, and a value of one bit indicates whether an overhead symbol corresponding to the bit carries the first ranging information.

Optionally, last X first overhead symbols in the at least one first overhead symbol are inverse to other first overhead symbols used to carry the first ranging information, the last X inverse first overhead symbols indicate channel switching, to implement frequency hopping from the first channel to another channel, and facilitate ranging interaction on the another channel, and X is a positive integer; and/or
last Y second overhead symbols in the at least one second overhead symbol are inverse to other second overhead symbols used to carry the second ranging information, the last Y inverse second overhead symbols indicate channel switching, to implement frequency hopping from the first channel to another channel, and facilitate ranging interaction on the another channel, and Y is a positive integer.

Optionally, in one superframe, a number of a 1st first radio frame included in the first ranging frame is greater than K, overhead symbols in a 1st radio frame to a radio frame numbered K in the superframe are used to perform control information transmission, and K is a positive integer greater than 1. The overhead symbol used to perform control information transmission is not used for ranging, that is, does not carry the ranging information.

**In** a possible implementation, the method further includes: receiving a fourth ranging frame from the first node on a second channel based on first information indicating channel switching, where the fourth ranging frame carries the first ranging information by using the at least one first symbol, and a frame structure of the fourth ranging frame is the same as or different from a frame structure of the first ranging frame, that is, a frame structure of a ranging frame transmitted on the first channel may be the same as or different from a frame structure of a ranging frame transmitted on the second channel; sending a fifth ranging frame to the first node on the second channel, where the fifth ranging frame carries the second ranging information by using the at least one second symbol, and a frame structure of the fifth ranging frame is the same as the frame structure of the fourth ranging frame; determining, based on the fifth ranging frame, third channel state information corresponding to the second channel; and sending the third channel state information to the first node, where the third channel state information is used to measure a distance between the first node and a receiver of the fourth ranging frame. This facilitates the first node implement inter-node ranging on the second channel. It can be learned that ranging accuracy and precision can be improved through frequency hopping.

Further, the method further includes: receiving the distance between the first node and the receiver of the first ranging frame from the first node, that is, learning of the distance to the first node, where the distance has high accuracy and precision.

Optionally, the method further includes: receiving second information, where the second information indicates a quantity of fourth ranging frames that are temporally continuously transmitted and/or a quantity of fifth ranging frames that are temporally continuously transmitted. This continuously transmits a ranging frame on a frequency hopping channel for frequency hopping ranging, and helps improve ranging accuracy and precision.

Optionally, a difference between a quantity of symbols that are included in the fourth ranging frame and that are used to carry the first ranging information and a quantity of symbols that are included in the first ranging frame and that are used to carry the first ranging information is less than a second threshold, and/or a difference between a quantity of symbols that are included in the fifth ranging frame and that are used to carry the second ranging information and a quantity of symbols that are included in the second ranging frame and that are used to carry the second ranging information is less than a second threshold, so that channel state information keeps a same or similar SNR on different channels.

Optionally, the method provided in the second aspect may be performed by a second node, or may be performed by a module in a second node, for example, performed by a chip in a second node.

According to a third aspect, this application provides a communication apparatus. The communication apparatus includes modules or units configured to perform the method according to any one of the first aspect or the second aspect.

In a possible design, the communication apparatus includes:
a communication unit, configured to: send a first ranging frame on a first channel, where the first ranging frame carries first ranging information by using at least one first symbol; receive a second ranging frame from a second node on the first channel, where the second ranging frame carries second ranging information by using at least one second symbol; and receive first channel state information, where the first channel state information is channel state information that is from the second node and that corresponds to the first channel; and
a processing unit, configured to: determine, based on the at least one second symbol, second channel state information corresponding to the first channel; and determine channel state information corresponding to the first channel based on the first channel state information and the second channel state information, where the channel state information corresponding to the first channel is used to measure a distance between a sender of the first ranging frame and the second node.

In a possible implementation, the first ranging frame includes at least one first radio frame, and the second ranging frame includes at least one second radio frame.

Optional manner 1: Symbols in the at least one first radio frame are all used to carry the first ranging information, symbols in the at least one second radio frame are all used to carry the second ranging information, there is a switching gap between a first radio frame and a second radio frame, and the switching gap is used to perform receive/transmit switching.

Optional manner 2: for any first radio frame of the at least one first radio frame, the first radio frame includes a switching gap, symbols except the switching gap are all used to carry the first ranging information, and the switching gap is temporally located after the symbols used to carry the first ranging information; and for any second radio frame of the at least one second radio frame, the second radio frame includes a switching gap, symbols except the switching gap are all used to carry the second ranging information, and the switching gap is temporally located after the symbols used to carry the second ranging information. The switching gap is used to perform receive/transmit switching.

Optional manner 3: for any first radio frame of the at least one first radio frame, the first radio frame includes a switching gap, a first overhead symbol, and a first link symbol, and the first overhead symbol and the first link symbol are used to carry the first ranging information; and for any second radio frame of the at least one second radio frame, the second radio frame includes a switching gap, a second overhead symbol, and a second link symbol, and the second overhead symbol and the second link symbol are used to carry the second ranging information. The switching gap is used to perform receive/transmit switching.

Optionally, the communication unit is further configured to send a first bitmap, where the first bitmap indicates a first radio frame in one superframe.

Optionally, for a last first radio frame in the at least one first radio frame, last N symbols that are included in the last first radio frame and that are used to carry the first ranging information are inverse to other symbols that are in the last first radio frame and that are used to carry the first ranging information, the last first radio frame indicates channel switching, and N is a positive integer; and/or
for a last second radio frame in the at least one second radio frame, last M symbols that are included in the last second radio frame and that are used to carry the second ranging information are inverse to other symbols that are in the last second radio frame and that are used to carry the second ranging information, the last second radio frame indicates channel switching, and M is a positive integer.

In another possible implementation, the first ranging frame includes at least one first overhead symbol, the at least one first overhead symbol is all or part of overhead symbols in at least one first radio frame, and the at least one first overhead symbol is used to carry the first ranging information; and the second ranging frame includes at least one second overhead symbol, the at least one second overhead symbol is all or part of overhead symbols in at least one second radio frame, and the at least one second overhead symbol is used to carry the second ranging information.

Optionally, the at least one first overhead symbol is the part of overhead symbols in the at least one first radio frame, and at least one third overhead symbol in the at least one first radio frame is a first link system overhead symbol or a second link system overhead symbol; and the at least one second overhead symbol is the part of overhead symbols in the at least one second radio frame, and at least one fourth overhead symbol in the at least one second radio frame is a first link system overhead symbol or a second link system overhead symbol.

Optionally, on the first channel, a difference between a quantity of symbols that are in the first ranging frame and that are used to carry the first ranging information and a quantity of symbols that are in the second ranging frame and that are used to carry the second ranging information is less than a first threshold.

Optionally, the communication unit is further configured to send a second bitmap, where the second bitmap indicates an overhead symbol that is in one superframe and that is used to carry the first ranging information.

Optionally, last X first overhead symbols in the at least one first overhead symbol are inverse to other first overhead symbols used to carry the first ranging information, the last X inverse symbols indicate channel switching, and X is a positive integer; and/or
last Y second overhead symbols in the at least one second overhead symbol are inverse to other second overhead symbols used to carry the second ranging information, the last Y inverse second overhead symbols indicate channel switching, and Y is a positive integer.

Optionally, in one superframe, a number of a 1st first radio frame included in the first ranging frame is greater than K, overhead symbols in a 1st radio frame to a radio frame numbered K in the superframe are used to perform control information transmission, and K is a positive integer greater than 1.

In a possible implementation, the communication unit is further configured to receive P third ranging frames from P third nodes on the first channel, where the third ranging frame carries the second ranging information by using the at least one second symbol, a frame structure of the third ranging frame is the same as a frame structure of the second ranging frame, and P is a positive integer.

Further, an order of the P third ranging frames and the second ranging frame in time domain meets a preset setting.

In a possible implementation, the communication unit is further configured to: send a fourth ranging frame on a second channel based on first information indicating channel switching, where the fourth ranging frame carries the first ranging information by using the at least one first symbol, and a frame structure of the fourth ranging frame is the same as or different from a frame structure of the first ranging frame; receive a fifth ranging frame from the second node on the second channel, where the fifth ranging frame carries the second ranging information by using the at least one second symbol, and a frame structure of the fifth ranging frame is the same as the frame structure of the fourth ranging frame; and receive third channel state information, where the third channel state information is channel state information that is from the second node and that corresponds to the second channel.

The processing unit is further configured to: determine, based on the fifth ranging frame, fourth channel state information corresponding to the second channel; and determine channel state information corresponding to the second channel based on the third channel state information and the fourth channel state information, where the channel state information corresponding to the second channel is used to measure a distance between a sender of the fourth ranging frame and the second node.

Further, the processing unit is further configured to determine the distance between the sender of the first ranging frame and the second node based on the channel state information corresponding to the first channel and the channel state information corresponding to the second channel.

Optionally, the communication unit is further configured to: send second information, where the second information indicates a quantity of fourth ranging frames that are temporally continuously transmitted and/or a quantity of fifth ranging frames that are temporally continuously transmitted.

Optionally, a difference between a quantity of symbols that are included in the fourth ranging frame and that are used to carry the first ranging information and a quantity of symbols that are included in the first ranging frame and that are used to carry the first ranging information is less than a second threshold, and/or a difference between a quantity of symbols that are included in the fifth ranging frame and that are used to carry the second ranging information and a quantity of symbols that are included in the second ranging frame and that are used to carry the second ranging information is less than a second threshold.

For technical effect brought by the third aspect or any possible implementations, refer to descriptions of the technical effect corresponding to the first aspect or the corresponding implementations.

In another possible design, the communication apparatus includes:
a communication unit, configured to: receive a first ranging frame from a first node on a first channel, where the first ranging frame carries first ranging information by using at least one first symbol; and send a second ranging frame to the first node on the first channel, where the second ranging frame carries second ranging information by using at least one second symbol; and
a processing unit, configured to determine, based on the at least one first symbol, first channel state information corresponding to the first channel.

The communication unit is further configured to send the first channel state information to the first node, where the first channel state information is used to measure a distance between the first node and a receiver of the first ranging frame.

In a possible implementation, the communication unit is further configured to receive a first bitmap, where the first bitmap indicates a first radio frame in one superframe, and symbols in the first radio frame are all used to carry the first ranging information; or the first radio frame includes a switching gap, symbols except the switching gap are all used to carry the first ranging information, the switching gap is temporally located after the symbols used to carry the first ranging information, and the switching gap is used to perform receive/transmit switching.

In another possible implementation, the communication unit is further configured to receive a second bitmap, where the second bitmap indicates an overhead symbol that is in one superframe and that is used to carry the first ranging information.

Optionally, the communication unit is further configured to: receive a fourth ranging frame from the first node on a second channel based on first information, where the fourth ranging frame carries the first ranging information by using the at least one first symbol, a frame structure of the fourth ranging frame is the same as or different from a frame structure of the first ranging frame, and the first information indicates channel switching; and send a fifth ranging frame to the first node on the second channel, where the fifth ranging frame carries the second ranging information by using the at least one second symbol, and a frame structure of the fifth ranging frame is the same as the frame structure of the fourth ranging frame.

The processing unit is further configured to determine, based on the fifth ranging frame, third channel state information corresponding to the second channel.

The communication unit is further configured to send the third channel state information to the first node, where the third channel state information is used to measure a distance between the first node and a receiver of the fourth ranging frame.

Further, the communication unit is further configured to receive the distance between the first node and the receiver of the first ranging frame from the first node.

For technical effect brought by the third aspect or any possible implementations, refer to descriptions of the technical effect corresponding to the second aspect or the corresponding implementations.

According to a fourth aspect, an embodiment of this application provides a communication apparatus, including a processor. The processor is coupled to a memory, and may be configured to execute instructions in the memory, to implement the method in any one of the first aspect and the second aspect and any possible implementation of the first aspect and the second aspect. Optionally, the communication apparatus further includes the memory. Optionally, the communication apparatus further includes a communication interface, and the processor is coupled to the communication interface.

According to a fifth aspect, an embodiment of this application provides a communication apparatus, including a logic circuit and a communication interface. The communication interface is configured to receive information or send information. The logic circuit is configured to receive information or send information through the communication interface, so that the communication apparatus performs the method in any one of the first aspect and the second aspect and any possible implementation of the first aspect and the second aspect.

According to a sixth aspect, an embodiment of this application provides a computer-readable storage medium. The computer-readable storage medium is configured to store a computer program (which may also be referred to as code or instructions). When the computer program is run on a computer, the method in any one of the first aspect and the second aspect and any possible implementation of the first aspect and the second aspect is implemented.

According to a seventh aspect, an embodiment of this application provides a computer program product. The computer program product includes a computer program (which may also be referred to as code or instructions). When the computer program is run, a computer is enabled to perform the method in any one of the first aspect and the second aspect and any possible implementation of the first aspect and the second aspect.

According to an eighth aspect, an embodiment of this application provides a chip. The chip includes a processor, the processor is configured to execute instructions, and when the processor executes the instructions, the chip is enabled to perform the method in any one of the first aspect and the second aspect and any possible implementation of the first aspect and the second aspect. Optionally, the chip further includes a communication interface, and the communication interface is configured to receive a signal or send a signal.

According to a ninth aspect, an embodiment of this application provides a terminal device. The terminal device includes at least one of a communication apparatus in the third aspect, the communication apparatus in the fourth aspect, the communication apparatus in the fifth aspect, or the chip in the eighth aspect.

According to a tenth aspect, an embodiment of this application provides a system. The system includes a terminal device and at least one of a communication apparatus in the third aspect, the communication apparatus in the fourth aspect, the communication apparatus in the fifth aspect, or the chip in the eighth aspect.

In addition, in a process of performing the method in any one of the first aspect and the possible implementations, or the method in any one of the second aspect and the possible implementations, processes related to sending information and/or receiving information and the like in the foregoing method may be understood as processes of outputting information by a processor, and/or a process of receiving input information by a processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method in any one of the first aspect and the possible implementations, or the method in any one of the second aspect and the possible implementations, the processor may be a processor specially configured to perform these methods, or may be a processor, for example, a general-purpose processor, that executes these methods by executing computer instructions in a memory. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

In a possible implementation, the at least one memory is located outside an apparatus.

In another possible implementation, the at least one memory is located in an apparatus.

In still another possible implementation, some memories in the at least one memory are located in an apparatus, and the other memories are located outside the apparatus.

In this application, the processor and the memory may alternatively be integrated into one component. In other words, the processor and the memory may alternatively be integrated together.

In this application, the ranging frame can be transmitted on the first channel between nodes by transmitting the ranging frame on the first channel. The ranging frame carries ranging information by using at least one symbol. This can perform transmission of the ranging information. The channel state information corresponding to the first channel can be determined based on the first channel state information and the second channel state information that correspond to the first channel. This implements inter-node ranging on the first channel, and helps improve ranging precision.

### BRIEF DESCRIPTION OF DRAWINGS

FIG. 1 is a diagram of an example of a structure of a superframe;
FIG. 2 is a diagram of a vehicle-mounted positioning scenario;
FIG. 3 is a diagram of a possible wireless communication system according to this application;
FIG. 4 is a diagram of an example of a frame structure of a ranging frame 1 according to this application;
FIG. 5 is a diagram of an example of a frame structure of a ranging frame 2 according to this application;
FIG. 6 is a diagram of an example of a frame structure of a ranging frame 3 according to this application;
FIG. 7 is a diagram of an example of a frame structure of a ranging frame 4 according to this application;
FIG. 8 is a diagram of an example of frequency hopping ranging;
FIG. 9 is a schematic flowchart of a ranging method according to this application;
FIG. 9-1 is a diagram of an example of ranging interaction according to this application;
FIG. 9-2 is a diagram of an example of another ranging interaction according to this application;
FIG. 10 is a schematic flowchart of another ranging method according to this application;
FIG. 10-1 is a diagram of an example of still another ranging interaction according to this application;
FIG. 11 is a schematic flowchart of still another ranging method according to this application;
FIG. 11-1 is a diagram of an example of still another ranging interaction according to this application;
FIG. 12 is a diagram of a structure of a communication apparatus according to an embodiment of this application;
FIG. 13 is a diagram of a structure of a communication apparatus according to an embodiment of this application; and
FIG. 14 is a diagram of a structure of a chip according to an embodiment of this application.

### DESCRIPTION OF EMBODIMENTS

In this application, words such as "first" and "second" are used to distinguish between same items or similar items that have basically a same function or purpose. A person skilled in the art may understand that the terms such as "first" and "second" do not limit a quantity or an execution sequence, and the terms such as "first" and "second" do not indicate a definite difference. A term "and/or" describes only an association relationship between associated objects and indicates that there may be three relationships. For example, A and/or B may represent the following three cases: Only A exists, both A and B exist, and only B exists. The character "/" generally indicates an "or" relationship between the associated objects.

It should be understood that, in this application, "at least one" means one or more, and "a plurality of" means two or more. In addition, "equal to" in this application may be used together with "greater than", or may be used together with "less than". In a case in which "equal to" and "greater than" are used together, a technical solution corresponding to "greater than" is used; and in a case in which "equal to" and "less than" are used together, a technical solution corresponding to "less than" is used.

The following first describes related names or terms in this application, to facilitate understanding by a person skilled in the art.

### 1. Node (node)

A node is an electronic device having a communication capability, and is also referred to as a communication node. For example, the node may include an independent device like a handheld terminal, a vehicle, a vehicle-mounted device, a network side device, a user device, an access terminal, a subscriber unit, a subscriber station, a mobile station, a mobile console, a remote station, a remote terminal, a wireless communication device, a user agent, or a user apparatus; or may be a part (for example, a chip or an integrated circuit) included in an independent device. The node may be any possible smart terminal device (for example, a mobile phone), a smart transportation device (for example, a vehicle or an uncrewed aerial vehicle), a smart manufacturing device, a smart home device (for example, a large screen or a speaker), or the like.

For example, when being a vehicle-mounted device, the node may be a vehicle cockpit (cockpit domain) device or a module in a vehicle cockpit device, for example, one or more of modules such as a cockpit domain controller (cockpit domain controller, CDC), a camera, a screen, a microphone, a speaker, an electronic key, and a passive entry passive start system controller. In a vehicle, the node may alternatively be a battery management system and a battery in a battery pack.

For example, when being a handheld terminal, the node may be a mobile phone (mobile phone), a wearable device, a tablet computer (pad), a computer (like a notebook computer or a palmtop computer) with a data receiving/sending function, or the like.

The node in embodiments of this application may be used in a plurality of application scenarios, for example, the following application scenarios: a mobile internet (mobile internet, MI), industrial control (industrial control), self-driving (self-driving), transportation safety (transportation safety), internet of things (internet of things, IoT), a smart city (smart city), or a smart home (smart home).

The node in this application may be used in a plurality of network types, for example, used in one or more of the following network types: SparkLink (SparkLink), a long term evolution (long term evolution, LTE) network, a 5th generation mobile communication technology (5th generation mobile communication technology, 5G), a wireless local area network (for example, Wi-Fi), Bluetooth (Bluetooth, BT), Zigbee (Zigbee), a vehicle-mounted short-distance wireless communication network, or the like.

In some application scenarios or some network types, a name of a device having a similar communication capability may not be referred to as a node. However, for ease of description, devices having communication capabilities are collectively referred to as nodes in embodiments of this application.

### 2. Superframe

A superframe is a concept in time domain. The superframe includes a plurality of radio frames, and one radio frame includes a plurality of symbols. For example, the symbol may be an orthogonal frequency-division multiplexing (orthogonal frequency-division multiplexing, OFDM) symbol.

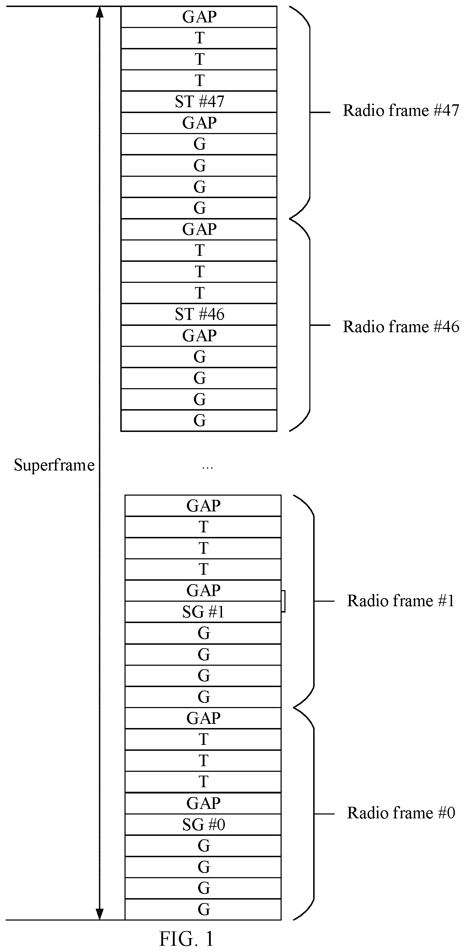

Currently, the SparkLink basic (SparkLink basic, SLB) standard related to SparkLink specifies frame structures of a superframe and a radio frame. A superframe periodicity is 1 millisecond (ms), that is, duration of a superframe is 1 ms. One superframe includes 48 radio frames, and duration of each radio frame is 1/48=20.833 microseconds (µs). In an example, as shown in FIG. 1, one superframe includes 48 radio frames, and numbers of the 48 radio frames are sequentially a radio frame #0 to a radio frame #47. Each radio frame includes several downlink symbols, several uplink symbols, overhead symbols, and switching gaps (gaps, GAPs). The downlink symbol is used for downlink transmission, and the uplink symbol is used for uplink transmission. The overhead symbol may also be described as a flexible symbol, a specific symbol, or the like, and is used for synchronization, channel sounding, downlink control information (downlink control information, DCI) transmission, or the like. The overhead symbol may be classified into a downlink overhead symbol and an uplink overhead symbol. The switching gap is used to perform uplink/downlink switching. Duration of one switching gap in a radio frame is, for example, duration of one symbol in the radio frame. Duration of one downlink symbol=Duration of one uplink symbol=Duration of one overhead symbol.

For example, in a vehicle-mounted (or non-vehicle-mounted) wireless short-range communication system, uplink usually indicates a direction in which a terminal (terminal, T) node sends data or information to a grant (grant, G) node, and may be represented by "T"; and downlink usually indicates a direction in which a G node sends data or information to the T node, and may be represented by "G". In FIG. 1, a downlink symbol is represented as a G symbol, and the G symbol may also be described as a G link symbol, a G link data symbol, or the like; and an uplink symbol is represented as a T symbol, and the T symbol is also described as a T link symbol, a T link data symbol, or the like. In the vehicle-mounted wireless short-range communication system, there is usually a communication requirement between different T nodes or between different G nodes, and communication between the different T nodes or between the different G nodes may occupy the foregoing overhead symbols. In FIG. 1, the downlink overhead symbol is represented as a special grant (special grant, SG) symbol, and the SG symbol may also be described as a G overhead symbol, an overhead G symbol, a G link overhead symbol, or the like; the uplink overhead symbol is represented as a special terminal (special terminal, ST) symbol, and the ST symbol may also be described as a T overhead symbol, an overhead T symbol, a T link overhead symbol, or the like. When a transmission direction is not distinguished, the G overhead symbol and the T overhead symbol may be collectively referred to as system overhead symbols.

Each radio frame may include one or two overhead symbols, and one superframe may include a maximum of 96 overhead symbols. In an example, in the superframe shown in FIG. 1, each radio frame in the superframe includes one overhead symbol, and the superframe includes 48 overhead symbols. For example, an overhead symbol included in the radio frame #0 is an SG symbol #0, and an overhead symbol included in a radio frame #46 is an ST symbol #46. It should be noted that, in FIG. 1, overhead symbols are continuously numbered from 0, instead of SG symbols being numbered from 0, and ST symbols being numbered from 0.

### 3. OFDM

An OFDM technology is a multi-carrier frequency division multiplexing (frequency division multiplexing, FDM) technology. A plurality of carriers (carriers) operate at the same time. These carriers may be referred to as subcarriers (subcarriers) in the FDM technology. The OFDM technology, also referred to as a discrete multitone modulation (discrete multitone modulation, DMT) technology, has a capability of high-rate transmission and can effectively resist frequency selective attenuation. In OFDM, a plurality of subcarriers are orthogonal, and therefore are referred to as orthogonal frequency division multiplexing. An operating frequency of the subcarrier corresponds to a frequency. From a perspective of a spectrum, each subcarrier uses a frequency of the subcarrier as a center frequency, and occupies a specific frequency bandwidth.

A quantity of subcarriers are adjusted, so that OFDM can flexibly change an operating bandwidth. This meets a requirement for a large bandwidth and has better capacity expansion effect.

In the OFDM technology, a signal is carried by using an OFDM symbol, and one OFDM symbol may correspond to one or more subcarriers. A cyclic prefix (cyclic prefix, CP) is added to the OFDM symbol to avoid inter-symbol interference. An OFDM symbol to which a CP is added is referred to as a CP-OFDM symbol. The CP-OFDM symbol may be classified into a normal (normal) CP-OFDM symbol and an extended (extended) CP-OFDM symbol. That is, CP types of the OFDM symbol may be classified into a type without CP, a type with a normal CP, and a type with an extended CP. The symbol in this application may be an OFDM symbol.

In an SLB technology, an OFDM symbol is used as a communication symbol. In the SLB technology, an OFDM symbol whose physical bandwidth is approximately 20 MHz is referred to as a carrier, and a center frequency (namely, a direct current (direct current, DC) subcarrier) of the 20 MHz OFDM symbol is referred to as a carrier frequency. That is, one carrier in SLB includes 39 continuous subcarriers, and the 39 subcarriers are sequentially numbered #0, #1, ..., and #38 in ascending order of corresponding frequencies. A subcarrier numbered #19 is a direct current (DC) subcarrier, and other 38 subcarriers except the DC subcarrier are referred to as valid subcarriers. The G node and the T node may operate on a plurality of carriers, and the plurality of carriers form a carrier group.

### 4. Frequency hopping

Frequency hopping means that a device switches a center frequency of a sent signal by changing a center frequency of a radio frequency channel of the device (for example, changing a carrier frequency of a local-frequency signal) or changing a center frequency of a generated sent signal in a digital manner. Frequency hopping may be frequency hopping based on an OFDM signal. OFDM frequency hopping is defined as that a DC subcarrier of an OFDM symbol is switched from a center frequency of one carrier channel to a center frequency of another carrier channel. Frequency hopping switching of a single carrier indicates that a DC subcarrier is switched from one carrier channel to another carrier channel. Frequency hopping switching of a plurality of carriers indicates that a carrier channel group corresponding to the plurality of carriers is switched to another carrier channel group. For example, a G node and a T node originally operate on a carrier channel group (1~4), and are switched to a carrier channel group (5~8) after frequency hopping. The carrier channel group (1~4) is referred to as an initial carrier channel group or initial channel group. The carrier channel group (5~8) is referred to as a frequency hopping carrier channel group or frequency hopping channel group. In this application, for ease of description, a carrier channel is referred to as a channel for short, and terms "channel" and "carrier channel" are interchangeable.

In this application, frequency hopping manners of different nodes may be the same (for example, both are radio frequency hopping or digital frequency hopping), or may be different (for example, a frequency hopping manner of a first node is radio frequency hopping, and a frequency hopping manner of a second node is digital frequency hopping). This is not limited in this application.

### 5. Ranging

Ranging indicates that at least two nodes send ranging radio signals to each other, to measure a distance between the at least two nodes. For example, a G node and a T node send ranging radio signals to each other, so as to measure a distance between the G node and the T node. For another example, a G node and a T node #1 send ranging radio signals to each other, to measure a distance between the G node and the T node #1; the G node and a T node #2 send ranging radio signals to each other, to measure a distance between the G node and the T node #2; and the T node #1 and the T node #2 send ranging radio signals to each other, to measure a distance between the T node #1 and the T node #2.

It may be understood that in embodiments of this application, similar steps are performed to implement ranging, positioning, angle measurement, perception, and the like. Therefore, "ranging" may be replaced with "positioning", "angle measurement", "perception", and the like.

The following describes an application scenario and a system architecture in embodiments of this application.

A communication system usually includes a plurality of nodes, and the nodes may communicate with each other to perform data transmission. A vehicle-mounted communication system is used as an example. There may be a plurality of communication domains in a vehicle. The communication domain is a system including a group of nodes having a communication relationship and a communication connection relationship (namely, a communication link) between the nodes, and is usually used to complete a specific function. For example, one communication domain may include one master node and at least one slave node, and communication may be performed between the master node and the slave node, or between the master nodes, or between the slave nodes. The master node may manage the slave node, has a resource allocation function, and is responsible for allocating a resource to the slave node. The slave node follows scheduling of the master node, and communicates with the master node and/or with another node with the resource allocated by the master node.

In some specific implementation scenarios, the master node may also be referred to as a G node, a grant node, or a control node, and the slave node may also be referred to as a T node or a terminal. A communication link from the G node to the T node may be referred to as a G link or downlink, and a communication link from the T node to the G node may be referred to as a T link or uplink.

This application may be applied to a vehicle-mounted wireless positioning scenario (for example, PEPS) and an indoor positioning scenario, or may be applied to another wireless wide area network communication scenario or a wireless local area network communication scenario.

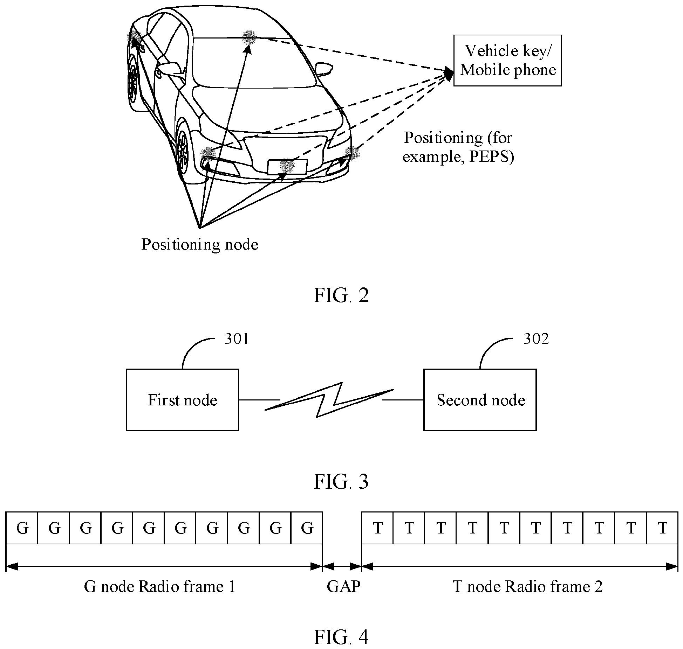

For example, in a vehicle-mounted positioning scenario, positioning nodes are deployed at four corners outside a vehicle, PEPS positioning nodes are deployed at a center console/rear view mirror/ceiling (inside the vehicle top), and vehicle-mounted wireless communication devices such as a display, microphone, loudspeaker, camera, and T-Box in the vehicle can also be used as positioning nodes. The positioning node and/or the PEPS positioning node may be configured to position a vehicle key/mobile phone. The vehicle key/mobile phone indicates an electronic device for positioning by the positioned node, and may be a conventional vehicle key with a positioning function, or may be a mobile phone or a wearable device with a positioning function. FIG. 2 is a diagram of a vehicle-mounted positioning scenario. A vehicle key/mobile phone may be used as G nodes, and all positioning nodes (including a PEPS positioning node) in a vehicle may be used as T nodes; or a PEPS positioning node is used as a G node, and other devices are used as T nodes.

A person skilled in the art should understand that the application scenario shown in FIG. 2 is merely an example scenario to which solutions of this application are applicable. In addition to the application scenario shown in FIG. 2, the solutions in this application may alternatively be applicable to any other appropriate application scenario, for example, but are not limited to scenarios such as a home, an office, an exhibition hall, or production.

For example, communication nodes include a first node and a second node. FIG. 3 is a diagram of a possible wireless communication system according to this application. The wireless communication system includes the first node 301 and the second node 302. The first node 301 may be a G node or a master node, and the second node 302 may be a T node or a slave node.

It should be understood that the communication system may further include more nodes. For ease of description, the first node and the second node are shown herein. For example, in a multicast scenario, there may be a plurality of second nodes.

The frame shown in FIG. 1 is a communication frame. Inter-node data transmission can be implemented based on the communication frame, but inter-node ranging cannot be implemented. Therefore, this application provides a ranging method, to implement inter-node ranging. To implement inter-node ranging, this application may provide a frame structure of a ranging frame. The following uses an example in which the first node is a G node and the second node is a T node to describe frame structures of several ranging frames provided in this application.

Ranging frame 1: For a ranging frame 1 sent by the G node, the ranging frame 1 includes at least one radio frame 1, and all symbols in the at least one radio frame 1 are used to carry ranging information 1; for a ranging frame 1 sent by the T node, the ranging frame 1 includes at least one radio frame 2, and all symbols in the at least one radio frame 2 are used to carry ranging information 2; and there is a switching gap (GAP) between the ranging frame 1 sent by the G node and the ranging frame 1 sent by the T node, and the switching gap is used to perform receive/transmit switching.

All the symbols in the at least one radio frame 1 are used to carry the ranging information 1. That is, all symbols included in any radio frame 1 are used to carry ranging information 1. The ranging information 1 may be a positioning reference signal (positioning reference signal, PRS) sent by the G node to the T node, and the PRS may be, for example, a channel state information reference signal (channel state information reference signal, CSI-RS), a first training signal (first training signal, FTS), or a second training signal (second training signal, STS). In other words, a symbol type of the any radio frame 1 is a CSI-RS symbol, an FTS symbol, or an STS symbol; or all the symbols in the any radio frame 1 are configured as CSI-RS symbols, FTS symbols, or STS symbols. The CSI-RS is a channel state information reference signal sent by the G node, and is used by another node to measure a characteristic (namely, channel state information) of a transmission channel from the G node to the another node. The FTS is a signal for time and frequency synchronization in a vehicle-mounted wireless short-range communication system, specifically, for example, a signal for time and frequency synchronization in the SparkLink basic (SparkLink Basic, SLB) standard; and the FTS is a signal that first appears in time domain, and may also be used to perform channel characteristic (namely, the channel state information) transmission. The STS is a signal for time and frequency synchronization in a vehicle-mounted wireless short-range communication system, specifically, for example, a signal for time and frequency synchronization in the SparkLink basic (SparkLink Basic, SLB) standard; and the STS is a signal that later appears in time domain, and may also be used to perform channel characteristic (namely, channel state information) transmission. It may be understood that, in a wireless short-range communication system, synchronization signals appear in pairs, that is, two synchronization signals are understood as a group of synchronization signals. In a group of synchronization signals, an OFDM symbol that first appears in time domain is referred to as an FTS, and an OFDM symbol that first appears in a time domain is referred to as an STS.

Correspondingly, all the symbols in the at least one radio frame 2 are used to carry the ranging information 2. That is, all symbols included any radio frame 2 are used to carry ranging information 2. The ranging information 2 may be a PRS sent by the T node to the G node, and the PRS may be, for example, a channel sounding signal (sounding reference signal, SRS), a second training signal (STS), or a first training signal (FTS). In other words, a symbol type of the any radio frame 2 is an SRS symbol, an STS symbol, or an FTS symbol; or all the symbols in the any radio frame 2 are configured as SRS symbols, STS symbols, or FTS symbols. The SRS is a channel sounding signal that is sent by another node and that is received by the G node, and is used by the G node to measure a characteristic (namely, channel state information) of a transmission channel from the another node to the G node.

All the symbols in the radio frame 1 are used to carry the ranging information 1, and all the symbols in the radio frame 2 are used to carry the ranging information 2. This increases a quantity of continuously transmitted symbols that carry ranging information, improves transmission efficiency and ranging accuracy; and continuous transmission can also facilitate centralized processing of the ranging information. There is the GAP between the ranging frame 1 sent by the G node and the ranging frame 1 sent by the T node, that is, the GAP neither occupies duration of the radio frame 1 nor duration of the radio frame 2. The GAP is used to perform receive/transmit switching, and the receive/transmit switching may also be described as uplink/downlink switching. Compared with that in the radio frame shown in FIG. 1, in the radio frame 1 and the radio frame 2, all GAPs in the radio frame shown in FIG. 1 are eliminated to the GAP between the radio frame 1 and the radio frame 2. This can reduce a quantity of switching times, and reduce overheads. For example, the radio frame #0 and the radio frame #1 shown in FIG. 1 include four GAPs in total, and there is one GAP between the radio frame 1 and the radio frame 2.

It should be noted that frame formats of the radio frame 1 and the radio frame 2 are not specifically limited in this application. SLB is used as an example. In the SLB standard, a radio frame is of a frame format including a plurality of cyclic prefix (CP)-OFDM (CP-OFDM) symbols, and a time duration is 640×Ts, where Ts is a sampling time interval of a baseband. However, in this application, the radio frame 1 and the radio frame 2 each may be of a frame format (a frame length may be less than 640×Ts) in which an OFDM symbol parameter is preconfigured by the G node, and one radio frame may include Q preconfigured OFDM symbols, where Q is a positive integer, and a value of Q may be configured based on an expected SNR. The preconfigured OFDM symbol parameters include at least one of the following: an OFDM symbol with a CP or without CP, an OFDM symbol with an extended CP or a normal CP, an OFDM symbol carrying a CSI-RS, an SRS, an FTS, an STS, or the like. For example, if CP types of the symbols included in the radio frame 1 and the radio frame 2 are types without CP, the radio frame 1 includes 10 CSI-RS symbols/FTS symbols, and the radio frame 2 includes 10 SRS symbols/STS symbols. For another example, if CP types of the symbols included in the radio frame 1 and the radio frame 2 are normal CPs, the radio frame 1 includes eight CSI-RS symbols, and the radio frame 2 includes eight SRS symbols. For still another example, if CP types of the symbols included in the radio frame 1 and the radio frame 2 are extended CPs, the radio frame 1 includes seven CSI-RS symbols, and the radio frame 2 includes seven SRS symbols. For another example, when Q is 1, it indicates that one ranging frame 1 (or one radio frame) includes one OFDM symbol, that is, a radio frame 1 and a radio frame 2 corresponding to the ranging frame 1 each include only one OFDM symbol. Based on a quantity of OFDM symbols in each of the radio frame 1 and the radio frame 2, configured by the G node, the G node and the T node use the ranging frame 1 with the corresponding quantity of OFDM symbols to perform ranging interactive measurement.

For example, in a frame structure of a ranging frame 1 shown in FIG. 4, the ranging frame 1 sent by the G node includes one radio frame 1, and the ranging frame 1 sent by the T node includes one radio frame 2. CP types of symbols included in the radio frame 1 and the radio frame 2 are types without CP. G in FIG. 4 represents a G link symbol, and the G link symbol may be configured as a CSI-RS symbol or an FTS symbol. T in FIG. 4 represents a T link symbol, and the T link symbol may be configured as an SRS symbol or an STS symbol.

Optionally, one or some symbols that carry the ranging information 1 in the radio frame 1 are inverse to other symbols that carries the ranging information 1, which may indicate channel switching, where channel switching may also be described as frequency hopping or jumping to another channel; and/or one or some symbols that carry ranging information 2 in the radio frame 2 are inverse to other symbols that carry the ranging information 2, which may indicate channel switching. The some symbols may be first several symbols, or last several symbols, or specified symbols, or preset symbols, or the like.

In an implementation, for a last radio frame 1 in the at least one radio frame 1, last N symbols that are included in the last radio frame 1 and that are used to carry the ranging information 1 are inverse to other symbols that are included in the last radio frame 1 and that are used to carry the ranging information 1, the last radio frame 1 may indicate channel switching, and the T node may perform channel switching based on the last radio frame 1; and/or for a last radio frame 2 in the at least one radio frame 2, last M symbols that are included in the last radio frame 2 and that are used to carry the ranging information 2 are inverse to other symbols that are in the last radio frame 2 and that are used to carry the ranging information 2, the last radio frame 2 may indicate channel switching, and the G node may perform channel switching based on the last radio frame 2. N and M are positive integers, and N and M may be the same or different. For example, N=2, and M=2. For another example, N=1, and M=2. In another implementation, for a last radio frame 1 in the at least one radio frame 1, first N' symbols that are included in the last radio frame 1 and that are used to carry the ranging information 1 are inverse to other symbols that are in the last radio frame 1 and that are used to carry the ranging information 1, the last radio frame 1 may indicate channel switching, and the T node may perform channel switching based on the last radio frame 3; and/or for a last radio frame 2 in the at least one radio frame 2, first M' symbols that are included in the last radio frame 2 and that are used to carry the ranging information 2 are inverse to other symbols that are in the last radio frame 2 and that are used to carry the ranging information 2, the last radio frame 2 may indicate channel switching, and the G node may perform channel switching based on the last radio frame 2. N' and M' are positive integers, and N' and M' may be the same or different.

For example, N=2, and M=2; and if CP types of symbols included in the radio frame 1 and the radio frame 2 are types without CP, frame structures of the last radio frame 1 and the last radio frame 2 may be shown in Table 1; or if CP types of symbols included in the radio frame 1 and the radio frame 2 are normal CPs, frame structures of the last radio frame 1 and the last radio frame 2 may be shown in Table 2; or if CP types of symbols included in the radio frame 1 and the radio frame 2 are extended CPs, frame structures of the last radio frame 1 and the last radio frame 2 may be shown in Table 3.

**Table 1**

| Radio frame structure (sequence number) | Symbol configuration | | | | | | | | | |
|---|---|---|---|---|---|---|---|---|---|---|
| | 0 | 1 | 2 | 3 | 4 | 5 | 6 | 7 | 8 | 9 |
| 1 | T | T | T | T | T | T | T | T | -T | -T |
| 2 | G | G | G | G | G | G | G | G | -G | -G |

**Table 2**

| Radio frame structure (sequence number) | Symbol configuration | | | | | | | |
|---|---|---|---|---|---|---|---|---|
| | 0 | 1 | 2 | 3 | 4 | 5 | 6 | 7 |
| 14 | T | T | T | T | T | T | -T | -T |
| 15 | G | G | G | G | G | G | -G | -G |

**Table 3**

| Radio frame structure (sequence number) | Symbol configuration | | | | | | |
|---|---|---|---|---|---|---|---|
| | 0 | 1 | 2 | 3 | 4 | 5 | 6 |
| 14 | T | T | T | T | T | -T | -T |
| 15 | G | G | G | G | G | -G | -G |

In Table 1 to Table 3, G represents a G link symbol, and the G link symbol may be configured as a CSI-RS symbol or an FTS symbol; T represents a T-link symbol, and the T-link symbol may be configured as an SRS symbol or an STS symbol; -G represents an inverse CSI-RS symbol or FTS symbol; and -T represents an inverse SRS symbol or STS symbol. Sequence numbers of the radio frame structures in Table 1 to Table 3 are used as examples, and do not constitute a limitation on this application.

Ranging frame 2: For a ranging frame 2 sent by the G node, the ranging frame 2 includes at least one radio frame 3, each radio frame 3 includes a switching gap (GAP), symbols except the GAP are used to carry ranging information 1, and the GAP is temporally located after the symbols used to carry the ranging information 1; and for a ranging frame 2 sent by the T node, the ranging frame 2 includes at least one radio frame 4, each radio frame 4 includes a switching gap (GAP), symbols except the GAP are used to carry ranging information 2, and the GAP is temporally located after the symbols used to carry the ranging information 2. The switching gap is used to perform receive/transmit switching. For the ranging information 1 and the ranging information 2, refer to descriptions of the ranging information 1 and the ranging information 2 in the ranging frames 1.

Optionally, there is one GAP in the radio frame 3, and the GAP occupies duration of one symbol in the radio frame 3; and there is one GAP in the radio frame 4, and the GAP occupies duration of one symbol in the radio frame 4. Compared with that in the radio frame shown in FIG. 1, in the radio frame 3 and the radio frame 4, some GAPs in the radio frame shown in FIG. 1 are eliminated. This can reduce a quantity of switching times, and reduce overheads. For example, the radio frame #0 and the radio frame #1 shown in FIG. 1 include four GAPs in total, the radio frame 3 and the radio frame 4 each include one GAP, the GAP in the radio frame 3 is located after the symbol carrying the ranging information 1, and the GAP in the radio frame 4 is located after the symbol carrying the ranging information 2.

It should be noted that frame formats of the radio frame 3 and the radio frame 4 are not specifically limited in this application. In this application, the radio frame 3 and the radio frame 4 each may be of a frame format (a frame length may be less than 640×Ts) in which an OFDM symbol parameter is preconfigured by the G node, and one radio frame may include Q preconfigured OFDM symbols, where Q is a positive integer, and a value of Q may be configured based on an expected SNR. The preconfigured OFDM symbol parameters include at least one of the following: an OFDM symbol with a CP or without CP, an OFDM symbol with an extended CP or a normal CP, an OFDM symbol carrying a CSI-RS, an SRS, an FTS, an STS, or the like. For example, if CP types of symbols included in the radio frame 3 and the radio frame 4 are types without CP, the radio frame 3 includes nine CSI-RS symbols and one GAP (temporally located after the nine CSI-RS symbols); and the radio frame 2 includes nine SRS symbols and one GAP (temporally located after the nine SRS symbols). For another example, if CP types of symbols included in the radio frame 1 and the radio frame 2 are normal CPs, the radio frame 3 includes seven CSI-RS symbols and one GAP (temporally located after the seven CSI-RS symbols), and the radio frame 4 includes seven SRS symbols and one GAP (temporally located after the seven SRS symbols).

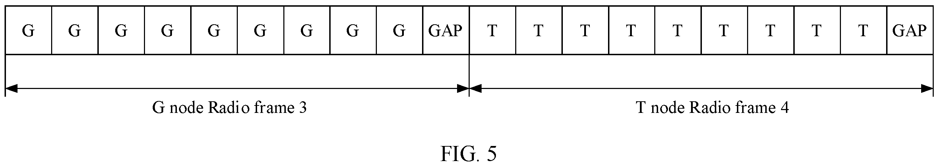

For example, in a frame structure of a ranging frame 2 shown in FIG. 5, the ranging frame 2 sent by the G node includes one radio frame 3, and the ranging frame 2 sent by the T node includes one radio frame 4. CP types of symbols included in the radio frame 3 and the radio frame 4 are types without CP. G in FIG. 5 represents a G link symbol, and the G link symbol may be configured as a CSI-RS symbol or an FTS symbol. T in FIG. 5 represents a T link symbol, and the T link symbol may be configured as an SRS symbol or an STS symbol.

Optionally, one or some symbols that carry the ranging information 1 in the radio frame 3 are inverse to other symbols that carries the ranging information 1, which may indicate channel switching; and/or one or some symbols that carry ranging information 2 in the radio frame 4 are inverse to other symbols that carry the ranging information 2, which may indicate channel switching. For details about channel switching indicated by using a phase inversion, refer to the specific description of the ranging frame 1. Details are not described herein again.

For example, N=2, M=2, and if CP types of symbols included in the radio frame 3 and the radio frame 4 are types without CP, frame structures of the last radio frame 3 and the last radio frame 4 may be shown in Table 4. Sequence numbers of the radio frame structures in Table 4 are used as examples, and do not constitute a limitation on this application.

**Table 4**

| Radio frame structure (sequence number) | Symbol configuration | | | | | | | | |
|---|---|---|---|---|---|---|---|---|---|
| | 0 | 1 | 2 | 3 | 4 | 5 | 6 | 7 | 8 |
| 1 | T | T | T | T | T | T | T | -T | -T |
| 2 | G | G | G | G | G | G | G | -G | -G |

A difference between the ranging frame 2 and the ranging frame 1 lies in as follows: There is the GAP between the radio frame 1 and the radio frame 2 in the ranging frame 1, and the GAP neither occupies the duration of the radio frame 1 nor the duration of the radio frame 2; while the radio frame 3 and the radio frame 4 in the ranging frame 2 each include one GAP, the GAP in the radio frame 3 is located after the symbol carrying the ranging information 1, and the GAP in the radio frame 4 is located after the symbol carrying the ranging information 2.

Ranging frame 3: For a ranging frame 3 sent by the G node, the ranging frame 3 includes at least one radio frame 5, each radio frame 5 includes a switching gap (GAP), a G overhead symbol, and a G link symbol, and the G overhead symbol and the G link symbol are used to carry ranging information 1; and for a ranging frame 3 sent by the T node, the ranging frame 3 includes at least one radio frame 6, each radio frame 6 includes a GAP, a T overhead symbol, and a T link symbol, and the T overhead symbol and the T link symbol are used to carry ranging information 2. The switching gap is used to perform receive/transmit switching. For the ranging information 1 and the ranging information 2, refer to descriptions of the ranging information 1 and the ranging information 2 in the ranging frames 1.

The radio frame 5 and the radio frame 6 may include one or two GAPs. If the radio frame 5 includes two switching gaps GAPs, further, the radio frame 5 further includes at least one T link symbol; and/or if the radio frame 6 includes two switching gaps, further, the radio frame 6 further includes at least one G link symbol.

It should be noted that frame formats of the radio frame 5 and the radio frame 6 are not specifically limited in this application. In this application, the radio frame 5 and the radio frame 6 each may be of a frame format (a frame length may be less than 640×Ts) in which an OFDM symbol parameter is preconfigured by the G node, and one radio frame may include Q preconfigured OFDM symbols, where Q is a positive integer, and a value of Q may be configured based on an expected SNR. The preconfigured OFDM symbol parameters include at least one of the following: an OFDM symbol with a CP or without CP, an OFDM symbol with an extended CP or a normal CP, an OFDM symbol carrying a CSI-RS, an SRS, an FTS, an STS, or the like. For example, on the basis of the radio frame #0 shown in FIG. 1, the G overhead symbol and the G link symbol in the radio frame #0 are used to carry the ranging information 1, that is, the G overhead symbol and the G link symbol in the radio frame #0 are configured as CSI-RS symbols or FTS symbols. This can obtain the radio frame 5. For another example, on the basis of the radio frame #46 shown in FIG. 1, the T overhead symbol and the T link symbol in the radio frame #46 are used to carry the ranging information 2, that is, the T overhead symbol and the T link symbol in the radio frame #46 are configured as SRS symbols or STS symbols. This can obtain the radio frame 6.

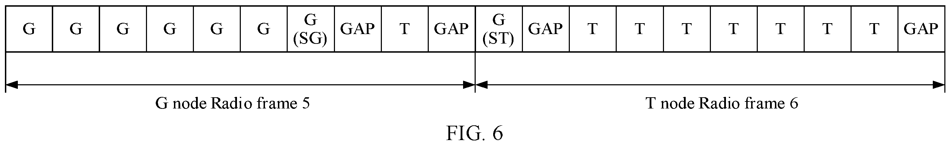

For example, in a frame structure of a ranging frame 3 shown in FIG. 6, the ranging frame 3 sent by the G node includes one radio frame 5, and the ranging frame 3 sent by the T node includes one radio frame 6. In FIG. 6, G in the radio frame 5 represents a G link symbol, G (SG) represents that a G link symbol is configured as a G overhead symbol, and the G link symbol and the G overhead symbol may be configured as CSI-RS symbols or FTS symbols. T in the radio frame 6 represents a T link symbol, G (ST) represents that a G link symbol is configured as a T overhead symbol, and the T link symbol and the T overhead symbol may be configured as SRS symbols or STS symbols. The radio frame 5 and the radio frame 6 in FIG. 6 may be of radio frame structures shown in Table 5.

**Table 5**

| Radio frame structure (sequence number) | Symbol configuration | | | | | | | |
|---|---|---|---|---|---|---|---|---|
| | 0 | 1 | 2 | 3 | 4 | 5 | 6 | 7 |
| 0 | G | T | T | T | T | T | T | T |
| 6 | G | G | G | G | G | G | G | T |

In Table 5, G represents a G link symbol, and T represents a T link symbol.

Optionally, one or some symbols that carry the ranging information 1 in the radio frame 5 are inverse to other symbols that carries the ranging information 1, which may indicate channel switching; and/or one or some symbols that carry ranging information 2 in the radio frame 6 are inverse to other symbols that carry the ranging information 2, which may indicate channel switching. For details about channel switching indicated by using a phase inversion, refer to the specific description of the ranging frame 1. Details are not described herein again.

Similar to the radio frame structure shown in Table 5, the ranging frame 3 may further use a radio frame structure with another sequence number. In a symbol configuration, a G link symbol may use a CSI-RS symbol, and a T link symbol may use an SRS symbol.

Ranging frame 4: For a ranging frame 4 sent by the G node, the ranging frame 4 includes at least one overhead symbol 1, the at least one overhead symbol 1 is all or some overhead symbols in at least one radio frame 7, and the at least one overhead symbol 1 is used to carry ranging information 1; and for a ranging frame 4 sent by the T node, the ranging frame 4 includes at least one overhead symbol 2, the at least one overhead symbol 2 is all or some overhead symbols in at least one radio frame 8, and the at least one overhead symbol 2 is used to carry ranging information 2. For the ranging information 1 and the ranging information 2, refer to descriptions of the ranging information 1 and the ranging information 2 in the ranging frames 1. The overhead symbol 1 is a G overhead symbol or a T overhead symbol, and the overhead symbol 2 is a G overhead symbol or a T overhead symbol.

Optionally, the at least one radio frame 7 and the at least one radio frame 8 are located in a same superframe, and therefore, the at least one overhead symbol 1 used to carry the ranging information 1 and the at least one overhead symbol 2 used to carry the ranging information 2 are located in the same superframe. In an implementation, in one superframe, overhead symbols in first K+1 radio frames (namely, radio frames numbered from 0 to K) are used to perform control information (for example, G link system information) transmission. In other words, overhead symbols in first K+1 radio frames cannot carry the ranging information 1 or ranging information 2, K is a positive integer greater than 1, and a specific value of K may be preset or predefined. In another implementation, in one superframe, first K overhead symbols are used to perform control information transmission, and cannot carry the ranging information 1 or ranging information 2. Optionally, a quantity of at least one overhead symbol 1 used to carry the ranging information 1 may be preset or predefined, and a quantity of at least one overhead symbol 2 used to carry the ranging information 2 may be preset or predefined.

Case in which one radio frame 7 includes one overhead symbol 1, and one radio frame 8 includes one overhead symbol 2:
All overhead symbols 1 in the at least one radio frame 7 are used to carry the ranging information 1, and all overhead symbols 2 in the at least one radio frame 8 are used to carry the ranging information 2. An interval between two adjacent overhead symbols used to carry the ranging information is large (20.83 µs). As a result, an estimated Doppler frequency shift is low.

Case in which one radio frame 7 includes two overhead symbols 1, and one radio frame 8 includes two overhead symbols 2:

In one manner, all overhead symbols 1 in the at least one radio frame 7 are used to carry the ranging information 1, and all overhead symbols 2 in the at least one radio frame 8 are used to carry the ranging information 2. This can expand an estimation range of a Doppler frequency shift, and is applicable to ranging in a high-speed moving scenario. Optionally, the two overhead symbols 1 that are included in the radio frame 7 and that are used to carry the ranging information 1 are continuous in time (that is, locations in time domain are adjacent), and the two overhead symbols 2 that are included in the radio frame 8 and that are used to carry the ranging information 2 are continuous in time. This reduces interference.

In another manner, in the at least one radio frame 7, some overhead symbols 1 are used to carry the ranging information 1, and the other overhead symbols 1 are G overhead symbols or T overhead symbols and are for synchronization or data transmission; and in the at least one radio frame 8, some overhead symbols 2 are used to carry the ranging information 2, and the other overhead symbols 2 are G overhead symbols or T overhead symbols and are for synchronization or data transmission. In other words, one overhead symbol 1 in any radio frame 7 is used to carry the ranging information 1, and the other overhead symbol 1 is for synchronization or data transmission; and one overhead symbol 1 in any radio frame 8 is used to carry the ranging information 1, and the other overhead symbol 2 is for synchronization or data transmission. Further, in the any radio frame 7, the overhead symbol 1 used to carry the ranging information 1 and the overhead symbol 1 for synchronization or data transmission may be arranged in a comb manner (the locations in time domain are adjacent); and/or in the any radio frame 8, the overhead symbol 2 used to carry the ranging information 2 and the overhead symbol 2 for synchronization or data transmission may be arranged in a comb manner. The comb manner may maintain synchronization performance of a communication system, and this improves ranging precision based on synchronization precision of a communication symbol (the overhead symbol for data transmission) while ensuring communication performance of the communication system.

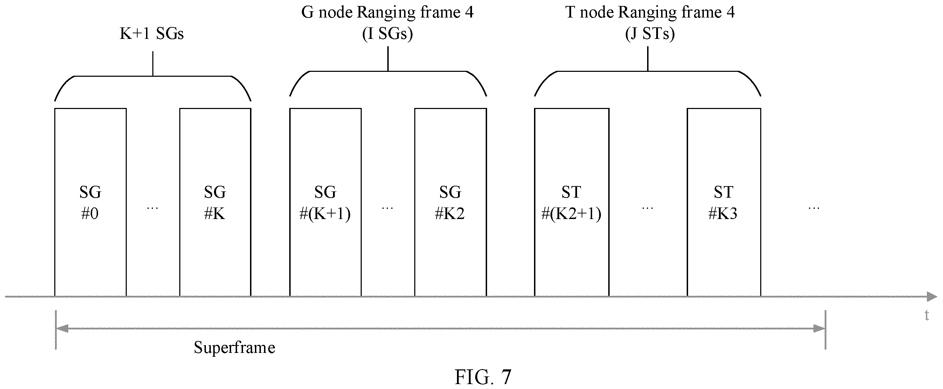

For example, in a frame structure of a ranging frame 4 shown in FIG. 7, where overhead symbols in one superframe are extracted; and the ranging frame 4 sent by the G node includes I overhead symbols 1 used to carry the ranging information 1, and the ranging frame 4 sent by the T node includes J overhead symbols 1 used to carry the ranging information 2. In FIG. 7, SG represents a G overhead symbol, ST represents a T overhead symbol, first K+1 G overhead symbols (namely, overhead symbols numbered from 0 to K) are used to transmit control information, G overhead symbols numbered from K+1 to K2 are used to carry the ranging information 1, and T overhead symbols numbered from K2+1 to K3 are used to carry the ranging information 2. I=K2-K1-1, J=K3-K2-1, and a difference between I and J is less than a first threshold. The difference may be an absolute value, and the first threshold may be 1; or the difference may be a relative value, and the first threshold may be ± 1.

Optionally, last X overhead symbols 1 in the at least one overhead symbol 1 are inverse to other overhead symbols 1 used to carry the ranging information 1, and the last X inverse overhead symbols 1 indicate channel switching; and/or last Y overhead symbols 2 in the at least one overhead symbol 2 are inverse to other overhead symbol 2 used to carry the ranging information 2, and the last Y inverse overhead symbols 2 indicate channel switching, where X is a positive integer, and Y is a positive integer. X and Y may be the same or different. For example, X=2, and Y=2.

It may be understood that, in the ranging frame 4, some overhead symbols in the superframe are used to carry the ranging information 1, and some overhead symbols in the superframe are used to carry the ranging information 2.

In periodic superframe transmission, the G node uses, in a front part of a first superframe, a reference signal like an FTS or an STS for timing and frequency synchronization of the T node, and inserts a synchronization signal in each superframe to maintain timing and frequency synchronization. Therefore, an overhead symbol and/or a link symbol in a subsequent superframe can be used to carry ranging information.

The ranging frame 1 to the ranging frame 4 may be understood as ranging frames of four different frame types. The ranging frame 1 and the ranging frame 2 are applicable to an initial channel or frequency hopping channel for frequency hopping ranging, and the ranging frame 3 and the ranging frame 4 are applicable to an initial channel for frequency hopping ranging. Optionally, based on an applicable channel, the ranging frame 3 and the ranging frame 4 may be referred to as first-type ranging frames, and the ranging frame 1 and the ranging frame 2 may be referred to as second-type ranging frames. It should be noted that the name of the ranging frame is used as an example, and may also be described as a positioning frame, a measurement frame, a sensing frame, or the like. As a standard evolves, another name may be used.

This application relates to frequency hopping ranging. Frequency hopping ranging refers to performing ranging interaction on a plurality of channels (for example, including at least: sending, by the G node a ranging frame 1 once, receiving, by the T node, a ranging frame 1 from the G node and performing measurement, sending a ranging frame 1 to the G node, and receiving, by the G node, a ranging frame 1 from the T node and performing measurement), and feeding back channel state information on a channel (the channel may be the same as or partially overlapped with an initial channel for frequency hopping ranging). The initial channel for frequency hopping ranging indicates an operating channel (group) after the G node and the T node complete association, that is, a channel (group) on which ranging negotiation is performed.

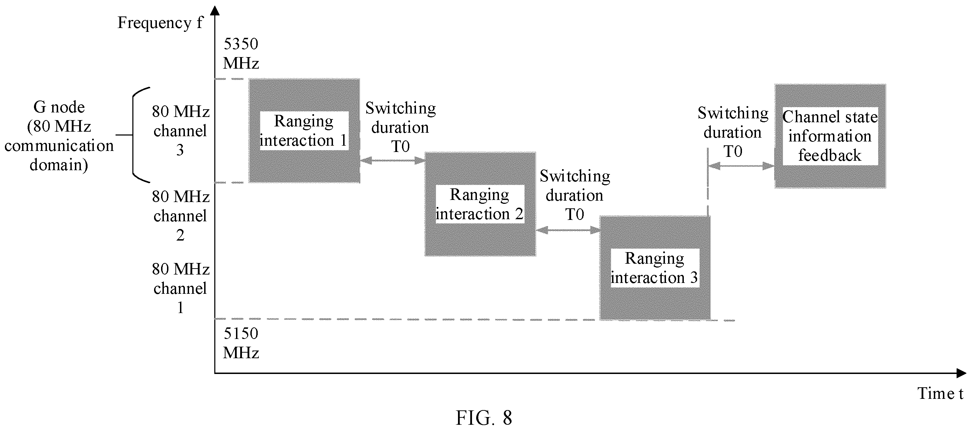

For example, FIG. 8 is a diagram of an example of frequency hopping ranging. In FIG. 8, switching duration T0=radio frequency (radio frequency, RF) switching stable duration (TRF)+listen-before-talk (listen-before-talk, LBT) duration (TLBT). TRF may be, for example, PLL phase locked loop (phase locked loop, PLL) stable duration. An initiator and/or responder node need to start an LBT operation or a clear channel assessment (clear channel assess, CCA) or carrier sensing multiple access only after TRF ends. In an LBT time window, if a channel indicates idle, ranging interaction starts on the channel. As shown in FIG. 8, an initial channel for frequency hopping ranging is a channel 3. After ranging interaction 1 is completed on the channel 3, in an LBT time window, if a channel 2 indicates idle, ranging interaction starts to be performed on the channel 2. Finally, channel state information may be fed back on the channel 3, and the channel state information fed back on the channel 3 may be obtained based on channel state information of the channel 3, the channel 2, and a channel 1. The channel state information fed back on the channel 3 may also be referred to as a ranging result, a positioning result, or the like.

The following describes, based on the ranging frame provided in this application, the ranging method provided in this application.

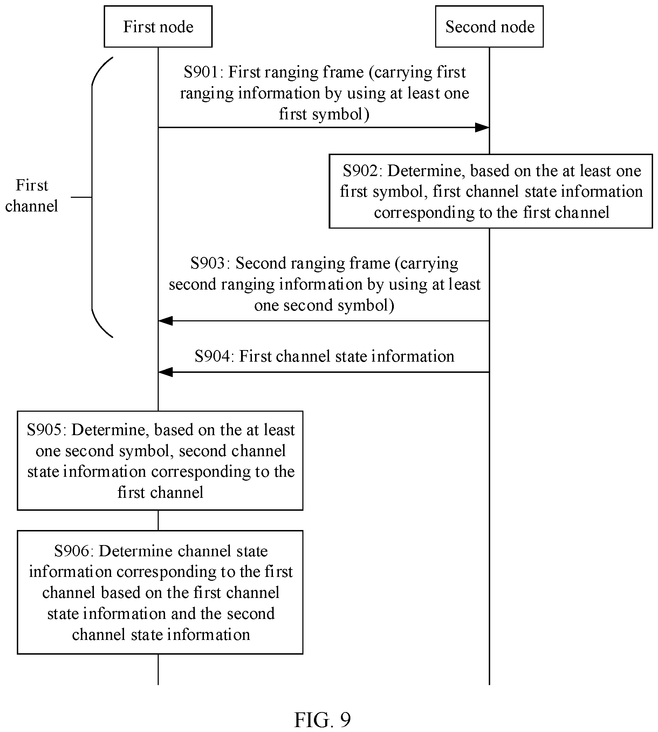

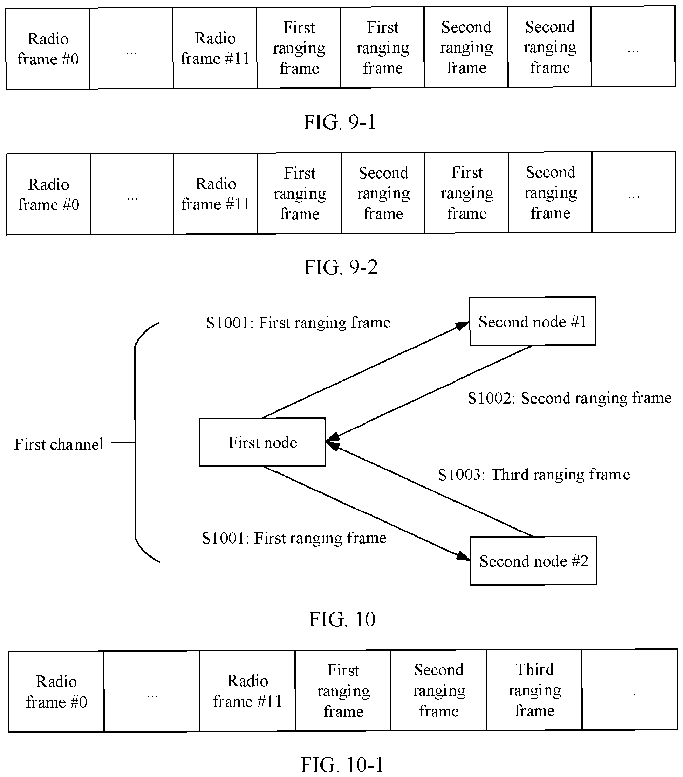

FIG. 9 is a schematic flowchart of a ranging method according to this application. The method may include but is not limited to the following steps.

S901: A first node sends a first ranging frame to a second node on a first channel. Correspondingly, the second node receives the first ranging frame from the first node on the first channel. The first ranging frame carries first ranging information by using at least one first symbol.

S902: The second node determines, based on the at least one first symbol, first channel state information corresponding to the first channel.

S903: The second node sends a second ranging frame to the first node on the first channel. Correspondingly, the first node receives the second ranging frame from the second node on the first channel. The second ranging frame carries second ranging information by using at least one second symbol.

S904: The second node sends the first channel state information to the first node. Correspondingly, the first node receives the first channel state information from the second node.

S905: The first node determines, based on the at least one second symbol, second channel state information corresponding to the first channel.

S906: The first node determines channel state information corresponding to the first channel based on the first channel state information and the second channel state information. The channel state information corresponding to the first channel is used to measure a distance between the first node and the second node.

It should be noted that an execution sequence of steps S901, S902, S903, S904, S905, and S906 is used as an example. This is not limited in embodiments of this application, and interaction in an actual scenario prevails. S902, S904, S905, and S906 may be performed on the first channel, or may not be performed on the first channel. The first channel may be an initial channel (group) for frequency hopping ranging, or may be a frequency hopping channel (group) for frequency hopping ranging. In FIG. 9, an example in which the first channel is an initial channel (group) for frequency hopping ranging is used.

The foregoing steps S901 and S903 may be understood as follows: The first node and the second node perform ranging frame transmission on the first channel, the first node may send one or more first ranging frames to the second node, and the second node may send one or more second ranging frames to the first node.

That the first ranging frame carries the first ranging information by using the at least one first symbol may be understood as that the at least one first symbol in the first ranging frame is used to carry the first ranging information. That the second ranging frame carries the second ranging information by using the at least one second symbol may be understood as that the at least one second symbol in the second ranging frame is used to carry the second ranging information. For the first ranging information, refer to specific descriptions of the ranging information 1 in the ranging frame 1, and for the second ranging information, refer to specific descriptions of the ranging information 2 in the ranging frame 1. Details are not described herein again.

A frame structure of the first ranging frame is the same as a frame structure of the second ranging frame, so that ranging frames with a same frame structure are used on the first channel. This helps improve stability of transmission of the ranging frame. For example, the frame structure of the first ranging frame may be any one of the ranging frame 1 to the ranging frame 4, and the frame structure of the second ranging frame is the same as the frame structure of the first ranging frame.

In a first implementation, the first ranging frame includes at least one first radio frame, and the second ranging frame includes at least one second radio frame.

Optional manner 1: Symbols in the at least one first radio frame are all used to carry the first ranging information, symbols in the at least one second radio frame are all used to carry the second ranging information, and there is a switching gap (GAP) between a first radio frame and a second radio frame. Optional manner 1 may correspond to the frame structure of the ranging frame 1. For details, refer to descriptions of the ranging frame 1.

Optional manner 2: for any first radio frame of the at least one first radio frame, the first radio frame includes a GAP, symbols except the GAP are all used to carry the first ranging information, and the GAP is temporally located after the symbols used to carry the first ranging information, that is, the GAP occupies duration of one symbol in the first radio frame; and for any second radio frame of the at least one second radio frame, the second radio frame includes a GAP, symbols except the GAP are all used to carry the second ranging information, and the GAP is temporally located after the symbols used to carry the second ranging information, that is, the GAP occupies duration of one symbol in the second radio frame. Optional manner 2 may correspond to the frame structure of the ranging frame 2. For details, refer to descriptions of the ranging frame 2.

Optional manner 3: for any first radio frame of the at least one first radio frame, the first radio frame includes a GAP, a first overhead symbol, and a first link symbol, and the first overhead symbol and the first link symbol are used to carry the first ranging information; and for any second radio frame of the at least one second radio frame, the second radio frame includes a GAP, a second overhead symbol, and a second link symbol, and the second overhead symbol and the second link symbol are used to carry the second ranging information. A transmission direction of a first link is different from a transmission direction of a second link. For example, the first link is a G link (that is, with a direction in which the G node sends data or information to the T node), and the second link is a T link (that is, with a direction in which the T node sends data or information to the G node). Further, the first link symbol and the second link symbol are used to carry information in different transmission directions, and the first overhead symbol and the second overhead symbol are used to carry information in different transmission directions. However, transmission directions of information carried by the first overhead symbol and the first link symbol are the same, and transmission directions of information carried by the second overhead symbol and the second link symbol are the same. For example, the first overhead symbol is a G overhead symbol, and the first link symbol is a G link symbol; and the second overhead symbol is a T overhead symbol, and the first link symbol is a T link symbol. Optional manner 3 may correspond to the frame structure of the ranging frame 3. For details, refer to descriptions of the ranging frame 3.

Optionally, for the foregoing first implementation, the first node may send first configuration information to the second node, so that the second node receives the first ranging frame based on the first configuration information. The first configuration information may include one or more of the following items.
1. First bitmap: A first bitmap indicates at least one first radio frame for ranging in one superframe, that is, indicate specific radio frames, in one superframe, used as first radio frames for ranging. Optionally, the first bitmap is a 48-bit (bit) bitmap, and corresponds to 48 radio frames in one superframe. A value of one bit indicates whether a radio frame corresponding to the bit is a first radio frame. For example, when the value of the bit is 1, it indicates that the radio frame corresponding to the bit is the first radio frame; or when the value of the bit is 0, it indicates that the radio frame corresponding to the bit is not the first radio frame. A plurality of first radio frames in one superframe may form the first ranging frame, or one first radio frame in one superframe is the first ranging frame. In other words, one superframe may include one or more first ranging frames. The second node may determine, based on the first bitmap, symbols, in one or more specific radio frames in one superframe, carrying the first ranging information. Alternatively, the first bitmap may be 48-bit indication information, and a value of a bit in the indication information indicates whether a radio frame corresponding to the bit is a first radio frame.
   Optionally, the first configuration information may further include a third bitmap indicating at least one second radio frame for ranging in one superframe, that is, indicate specific radio frames, in one superframe, used as second radio frames for ranging. Optionally, the third bitmap is a 48-bit bitmap, and corresponds to 48 radio frames in one superframe. A value of one bit indicates whether a radio frame corresponding to the bit is a second radio frame. A plurality of second radio frames in one superframe may form the second ranging frame, or one second radio frame in one superframe is the second ranging frame. In other words, one superframe may include one or more second ranging frames. The second node may determine, based on the third bitmap, to use symbols, in one or more specific radio frames in one superframe, for carrying the second ranging information.
2. A quantity L1 of superframes: A quantity L1 of superframes indicates, namely, L1 superframes, and the L1 superframes are continuous in time domain. Each of the L1 superframes includes the first ranging frame, or it is described as that each of the L1 superframes includes a first radio frame for ranging. L1 is a positive integer. The quantity L1 of superframes may also be described as a quantity L1 of superframes corresponding to the first ranging frames. The second node may determine, based on the quantity L1 of superframes and the first bitmap, a time-frequency resource for transmitting the first ranging frame.
   Optionally, the first configuration information may further include a quantity L2 of superframes, namely, L2 superframes, and the L2 superframes are continuous in time domain. Each of the L2 superframes includes the second ranging frame, or it is described as that each of the L2 superframes includes a second radio frame for ranging. L2 is a positive integer. A specific value of L2 may be the same as a specific value of L1, or a difference between the two values is less than ± 1. If the specific value of L2 is the same as the specific value of L1 by default, the first configuration information includes the quantity L1 of superframes. The first node and the second node perform ranging interaction in a superframe, for example, perform ranging interaction in each of the L1 superframes, where the first configuration information includes the quantity L1 of superframes.
3. First indication information: First indication information indicates whether a first bitmap corresponding to each of the L1 superframes is the same. For example, the first indication information may be indicated by using 1 bit. If a value of the bit is 1, it indicates that the first bitmap corresponding to each of the L1 superframes is the same; or if a value of the bit is 0, it indicates that the first bitmap corresponding to each of the L1 superframes is different. One superframe may correspond to one first bitmap. For example, a superframe #1 corresponds to a first bitmap #1, and the first bitmap #1 is a 48-bit bitmap that corresponds to 48 radio frames of the superframe #1. Each of the L1 superframes corresponds to a different first bitmap. For example, a superframe #1 corresponds to a first bitmap #1, a superframe #2 corresponds to a first bitmap #2, and the first bitmap #1 is different from the first bitmap #2.

If the first indication information indicates that the first bitmap corresponding to each of the L1 superframes is the same, the first configuration information may include one first bitmap, and the first bitmap is applicable to each of the L1 superframes. Further, numbers of first radio frames that are for ranging and that are included in all the L1 superframes are the same. In other words, the first ranging frame repeatedly appears in the L1 continuous superframes. Further, the second node may determine, based on the first bitmap and the L1 superframes, the time-frequency resource for transmitting the first ranging frame. Alternatively, if the first indication information indicates that the first bitmap corresponding to each of the L1 superframes is different, the first configuration information may include a maximum of L1 first bitmaps, and any two of the L1 first bitmaps are different. Further, the second node may separately determine, based on the first bitmap corresponding to each of the L1 superframes, a time-frequency resource for transmitting the first ranging frame. For example, when L1=2, the second node determines, based on a first bitmap #1 corresponding to a superframe #1, a time-frequency resource for transmitting the first ranging frame in the superframe #1, and determines, based on a first bitmap #2 corresponding to a superframe #2, a time-frequency resource for transmitting the first ranging frame in the superframe #2.

Optionally, the first configuration information may further include second indication information indicating whether a third bitmap corresponding to each of L2 superframes is the same. For example, the second indication information may be indicated by using 1 bit. If a value of the bit is 1, it indicates that the third bitmap corresponding to each of the L2 superframes is the same; or if a value of the bit is 0, it indicates that the third bitmap corresponding to each of the L2 superframes is different.

4. A quantity of times of ranging interaction (or referred to as measurement interaction) for frequency hopping ranging: The quantity of times may be 1 to 256, and a specific value may be indicated by using, for example, an 8-bit field. Ranging interaction once may be as follows: The first node sends the first ranging frame once, the second node receives the first ranging frame and sends the second ranging frame to the first node once, and the first node receives the second ranging frame.

5. A quantity of first ranging frames on the first channel

6. Third indication information: Third indication information indicates whether a quantity of first ranging frames on the first channel is the same as a quantity of second ranging frames. For example, 1 bit may be used for indication; and if a value of the bit is 1, it indicates that the quantity of first ranging frames is the same as the quantity of second ranging frames; or if a value of the bit is 0, it indicates that the quantity of first ranging frames is different from the quantity of second ranging frames. If the quantity of first ranging frames is different from the quantity of second ranging frames, the first configuration information may further include a quantity of second ranging frames on the first channel.

The first configuration information may be determined by the first node or preconfigured by the first node. Optionally, the second node may send second configuration information to the first node, so that the first node receives the second ranging frame. Content included in the second configuration information is similar to content included in the first configuration information. For example, the second configuration information includes a third bitmap, so that the first node determines, based on the third bitmap, one or more specific second radio frame, of one superframe, carrying the second ranging information. The second configuration information may be determined by the second node or preconfigured by the second node.

For example, in one superframe, the first ranging frame includes one first radio frame, and the second ranging frame includes one second radio frame. For ranging interaction between the first node and the second node in the superframe, refer to FIG. 9-1 and FIG. 9-2. In FIG. 9-1 and FIG. 9-2, a radio frame #0 to a radio frame #11 are used to perform control information transmission. In FIG. 9-1, the first node continuously sends two first ranging frames to the second node, where the two first ranging frames carry the first ranging information by using symbols in a radio frame #12 and a radio frame #13. The second node continuously sends two second ranging frames to the first node, where the two second ranging frames carry the second ranging information by using symbols in a radio frame #14 and a radio frame #15. In FIG. 9-2, the first node sends one first ranging frame to the second node, where the first ranging frame carries the first ranging information by using a symbol in a radio frame #12; the second node sends one second ranging frame to the first node, where the second ranging frame carries the second ranging information by using a symbol in a radio frame #13; the first node then sends one first ranging frame to the second node, where the first ranging frame carries the first ranging information by using a symbol in a radio frame #14; and the second node then sends one second ranging frame to the first node, where the second ranging frame carries the second ranging information by using a symbol in a radio frame #15. It may be understood that, in FIG. 9-1, the first node and the second node perform ranging interaction once, and each of the first node and the second node sends two continuous ranging frames in the ranging interaction. In FIG. 9-2, the first node and the second node perform ranging interactions twice, and each of the first node and the second node sends one ranging frame in each ranging interaction.

In a second possible implementation, the first ranging frame includes at least one first overhead symbol, the at least one first overhead symbol is all or part of overhead symbols in at least one first radio frame, and the at least one first overhead symbol is used to carry the first ranging information; and the second ranging frame includes at least one second overhead symbol, the at least one second overhead symbol is all or part of overhead symbols in at least one second radio frame, and the at least one second overhead symbol is used to carry the second ranging information. The second implementation may correspond to the frame structure of the ranging frame 4. For details, refer to descriptions of the ranging frame 4.

Optionally, on the first channel, a difference between a quantity of symbols that are in the first ranging frame and that are used to carry the first ranging information and a quantity of symbols that are in the second ranging frame and that are used to carry the second ranging information is less than a first threshold, so that an SNR corresponding to the first channel state information is the same as or similar to an SNR corresponding to the second channel state information. The difference may be an absolute value, and the first threshold may be 1; or the difference may be a relative value, and the first threshold may be ± 1.

Optionally, for the foregoing second implementation, the first node may send a second bitmap to the second node, where the second bitmap indicates an overhead symbol that is used to carry the first ranging information and that is in one superframe. Optionally, the second bitmap is a 96-bit bitmap that corresponds to 96 overhead symbols in one superframe. A value of one bit indicates whether an overhead symbol corresponding to the bit carries the first ranging information. For example, when the value of the bit is 1, it indicates that the overhead symbol corresponding to the bit carries the first ranging information; or when the value of the bit is 0, it indicates that the overhead symbol corresponding to the bit carries the first ranging information. Alternatively, the third bitmap may be 96-bit indication information, and a value of a bit in the indication information indicates whether an overhead symbol corresponding to the bit carries the first ranging information. The second bitmap may be carried in configuration information sent by the first node to the second node, for example, third configuration information.

Optionally, the third configuration information may further include a fourth bitmap, and the fourth bitmap indicates an overhead symbol that is used to carry the second ranging information and that is in one superframe. Optionally, the fourth bitmap is a 96-bit bitmap that corresponds to 96 overhead symbols in one superframe. A value of one bit indicates whether an overhead symbol corresponding to the bit carries the second ranging information. For example, when the value of the bit is 1, it indicates that the overhead symbol corresponding to the bit carries the second ranging information; or when the value of the bit is 0, it indicates that the overhead symbol corresponding to the bit does not carry the first ranging information. Alternatively, the second node sends a fourth bitmap to the first node, so that the first node determines specific overhead symbols, in one superframe, carrying the second ranging information.

The third configuration information may be determined by the first node or preconfigured by the first node.

For example, in one superframe, for example, the first ranging frame includes I first overhead symbols, and the second ranging frame includes J second overhead symbols. In the superframe, the first node and the second node perform ranging interaction once. A difference between I and J is less than the first threshold. I and J are positive integers.

The foregoing steps S902, S904, S905, and S906 may be understood as follows: The first node and the second node perform ranging based on ranging information carried in a ranging frame to determine corresponding channel state information. The first node determines the channel state information corresponding to the first channel based on the first channel state information and the second channel state information. The channel state information corresponding to the first channel is used to measure the distance between the first node and the second node. This implements ranging between nodes on the first channel, and helps improve ranging precision.

The first channel state information indicates subcarrier measurement information of the first ranging frame or an arrival moment of the first ranging frame, and may be understood as channel state information that is from the first node to the second node and that is obtained by the second node through measurement on the first channel, namely, a distance from the first node to the second node. Correspondingly, the second channel state information indicates subcarrier measurement information of the second ranging frame or an arrival moment of the second ranging frame, and may be understood as channel state information that is from the second node to the first node and that is obtained by the first node through measurement on the first channel, namely, a distance from the second node to the first node. The channel state information corresponding to the first channel indicates channel state information obtained by combining the first channel state information and the second channel state information, and is used to measure the distance between the first node and the second node. The subcarrier measurement information indicates a measurement value (namely, frequency domain channel state information) of a frequency corresponding to a subcarrier that is determined by receiving a PRS symbol, demodulating a known ranging OFDM symbol, and performing frequency domain channel estimation.

In an embodiment shown in FIG. 9, transmission of a ranging frame can be performed on the first channel by sending the first ranging frame and receiving the second ranging frame on the first channel. The ranging frame carries ranging information by using at least one symbol. This can perform transmission of the ranging information. The channel state information corresponding to the first channel can be determined based on the first channel state information and the second channel state information that correspond to the first channel. This implements inter-node ranging on the first channel, and helps improve ranging precision.

A communication manner between the first node and the second node in FIG. 9 is unicast, and the ranging frame provided in this application may also be applied to a multicast communication manner.

FIG. 10 is a schematic flowchart of another ranging method according to this application. The method may include but is not limited to the following steps.

S1001: A first node broadcasts a first ranging frame on a first channel.

Optionally, on the first channel, the first node broadcasts the first ranging frame to a second node in a communication domain of the first node. Correspondingly, the second node in the communication domain receives the first ranging frame from the first node. For the first channel and the first ranging frame, refer to specific descriptions of the first channel and the first ranging frame in the embodiment shown in FIG. 9. Details are not described herein again.

The communication domain of the first node may be understood as a ranging group formed in a ranging negotiation process. The ranging group includes at least one first node and one second node, for example, includes at least one G node and one T node. A quantity of second nodes in the communication domain of the first node is not limited in this application. In FIG. 10, an example in which the communication domain includes two T nodes, namely, a second node #1 and a second node #2 is used. On the first channel, the first node broadcasts the first ranging frame, the second node #1 may receive the first ranging frame, and the second node #2 may also receive the first ranging frame.

Further, when receiving the first ranging frame, the second node #1 may determine, based on the first ranging frame, channel state information 1 corresponding to the first channel, and specifically, may determine, based on at least one first symbol, the channel state information 1 corresponding to the first channel. When receiving the first ranging frame, the second node #2 may determine, based on the first ranging frame, channel state information 2 corresponding to the first channel. It may be understood that the second node in the communication domain performs ranging on the first ranging frame broadcast by the first node.

S1002: The second node #1 sends a second ranging frame to the first node on the first channel. Correspondingly, the first node receives the second ranging frame from the second node #1.

S1003: The second node #2 sends a third ranging frame to the first node on the first channel. Correspondingly, the first node receives the third ranging frame from the second node #2.

The second ranging frame carries second ranging information by using at least one second symbol, and the third ranging frame carries second ranging information by using at least one second symbol. Frame structures of the first ranging frame, the second ranging frame, and the third ranging frame are the same, for example, the structure of the foregoing ranging frame 1.

An order of the third ranging frame and the second ranging frame in time domain meets a preset setting. In an implementation, the preset setting may be an order of identifiers of a plurality of second nodes in the communication domain. For example, an identifier of the second node #1 in the communication domain is a node 1, and an identifier of the second node #2 in the communication domain is a node 2. If the identifiers are in ascending order, the second ranging frame is before the third ranging frame in time domain; or if the identifiers are in descending order, the second ranging frame is after the third ranging frame in time domain. In another implementation, the preset setting may be ranks determined by a plurality of second nodes in a ranging negotiation process. For example, if it is determined in the ranging negotiation process that the second node #1 is before the second node #2, the second ranging frame is before the third ranging frame in time domain. For another example, if it is determined in the ranging negotiation process that the second node #2 is before the second node #1, the third ranging frame is before the second ranging frame in time domain. The two implementations are used as examples, and do not constitute a limitation on this application.

For example, in one superframe, the first ranging frame includes one first radio frame, and the second ranging frame and the third ranging frame each include one second radio frame. For ranging interaction in the superframe, refer to FIG. 10-1. In FIG. 10-1, a radio frame #0 to a radio frame #11 are used to perform control information transmission, and the second ranging frame is before the third ranging frame.

In FIG. 10, an example in which the first node broadcasts the first ranging frame to the two second nodes on the first channel is used. Further, on the first channel, the first node broadcasts the first ranging frame, receives the second ranging frame from the second node, and receives P third ranging frames from P third nodes (an example in which one third node sends one third ranging frame). An order of the P third ranging frames and the second ranging frames in time domain meets the preset setting. Both the second node and the third node are T nodes. That is, the first node broadcasts the first ranging frame, and receives a plurality of second ranging frames from a plurality of second nodes (for example, one second node sends one second ranging frame), and an order of the plurality of second ranging frames in time domain meets the preset setting.

In an embodiment shown in FIG. 10, the first node broadcasts the first ranging frame. This can reduce overheads and reduce power consumption of the first node.

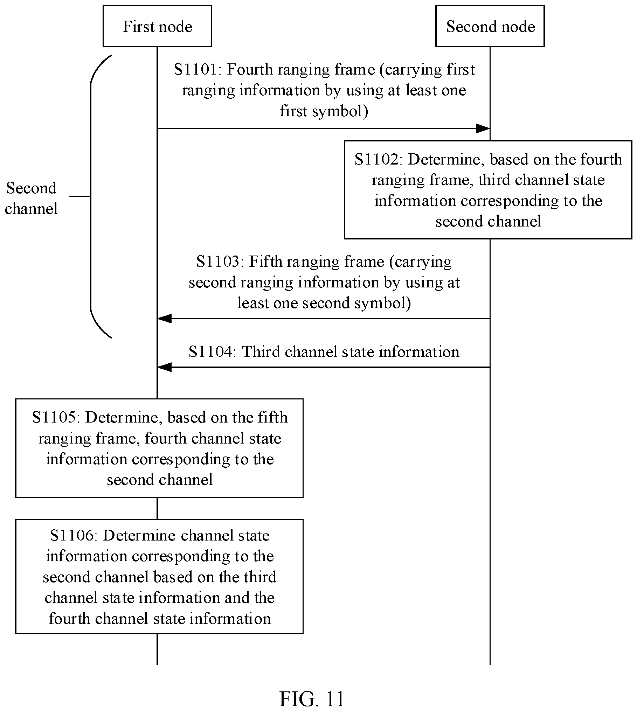

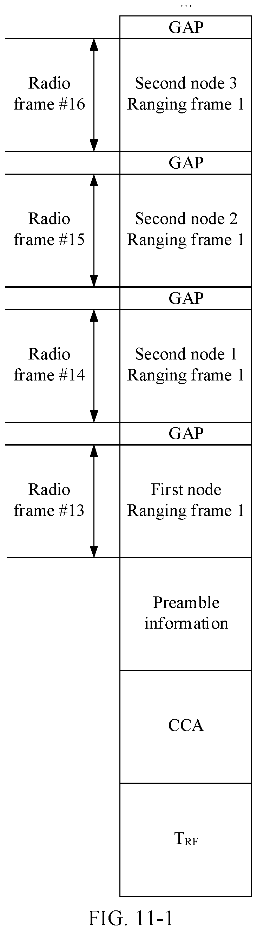

In FIG. 9 and FIG. 10, ranging interaction is performed by using an example in which the first channel is an initial channel (group) for frequency hopping ranging. If switching is performed from the initial channel to a frequency hopping channel (or described as frequency hopping from the initial channel to another channel), ranging interaction on the frequency hopping channel is similar to ranging interaction on the first channel. For example, a frequency hopping channel is referred to as a second channel. FIG. 11 is a schematic flowchart of still another ranging method according to this application. The method may include but is not limited to the following steps.

S1101: A first node sends a fourth ranging frame to a second node on the second channel. Correspondingly, the second node receives the fourth ranging frame from the first node.

The fourth ranging frame carries first ranging information by using at least one first symbol. Frame structures of the fourth ranging frame and the foregoing first ranging frame are the same or different. For example, the first ranging frame is the foregoing ranging frame 4, and the fourth ranging frame is the foregoing ranging frame 1. For another example, both the first ranging frame and the fourth ranging frame are the foregoing ranging frame 1.

S1102: The second node determines, based on the fourth ranging frame, third channel state information corresponding to the second channel.

S1103: The second node sends a fifth ranging frame to the first node on the second channel. Correspondingly, the first node receives the fifth ranging frame from the second node on the second channel.

The fifth ranging frame carries second ranging information by using at least one second symbol. Frame structures of the fifth ranging frame and the foregoing second ranging frame are the same or different. For example, the fifth ranging frame is the foregoing ranging frame 4, and the second ranging frame is the foregoing ranging frame 1. For another example, both the fifth ranging frame and the second ranging frame are the foregoing ranging frame 1.

S1104: The second node sends the third channel state information to the first node. Correspondingly, the first node receives the third channel state information from the second node.

S1105: The first node determines, based on the fifth ranging frame, fourth channel state information corresponding to the second channel.

S1106: The first node determines channel state information corresponding to the second channel based on the third channel state information and the fourth channel state information. The channel state information corresponding to the second channel is used to measure a distance between the first node and the second node.

In an embodiment shown in FIG. 11, for a part that is the same as or similar to that in the embodiment shown in FIG. 9, refer to descriptions in FIG. 9. Details are not described herein again.

Further, the first node determines the distance between the first node and the second node based on the channel state information corresponding to the second channel and the foregoing channel state information corresponding to the first channel. That is, the first node determines a final distance between the first node and the second node based on channel state information corresponding to a plurality of channels. For example, in a vehicle-mounted positioning scenario, a distance between a vehicle key and a positioning node may be indicated. Frequency hopping can increase a measurement bandwidth of frequency hopping ranging, and help improve ranging accuracy and precision. In this application, the distance between the first node and the second node is determined through ranging interaction of a plurality of channels, and has relatively high accuracy and precision.

Optionally, the first node may send the distance between the first node and the second node to the second node, so that the second node learns of the distance to the first node.

Channel switching may be implemented in the following Manner 1 and/or Manner 2.

Manner 1: The first node and/or the second node may perform channel switching based on first information. The first information indicates channel switching or frequency hopping. The first information may be preconfigured frequency hopping information, for example, a preconfigured timer. When the timer expires, channel switching may be performed.

Manner 2: A radio frame in which a phase-inverse symbol is located indicates channel switching. Manner 2 may be classified into two manners based on a frame structure of a ranging frame, as shown in the following two manners: Manner 2.1 and Manner 2.2.

Manner 2.1: The first ranging frame and the second ranging frame each are the ranging frame 1, the ranging frame 2, or the ranging frame 3, the first ranging frame includes at least one first radio frame, and the second ranging frame includes at least one second radio frame.

For a last second radio frame of the at least one second radio frame received by the first node, if last M symbols that are used to carry the second ranging information and that are included in the last second radio frame are inverse to other symbols that are used to carry the second ranging information and that are in the last second radio frame, the last second radio frame may indicate channel switching. When receiving the last second radio frame, the first node may perform channel switching.

For a last first radio frame of the at least one first radio frame received by the second node, if last N symbols that are used to carry the first ranging information and that are included in the last first radio frame are inverse to other symbols that are used to carry the first ranging information and that are in the last first radio frame, the last first radio frame may indicate channel switching. When receiving the last first radio frame, the second node may perform channel switching when sending of the second ranging frame is completed.

Manner 2.2: The first ranging frame and the second ranging frame each are the ranging frame 4, the first ranging frame includes at least one first overhead symbol, and the second ranging frame includes at least one second overhead symbol.

If last Y second overhead symbols in the at least one second overhead symbol received by the first node are inverse to other second overhead symbols used to carry the second ranging information, the last Y inverse second overhead symbols may indicate channel switching, or a first radio frame in which the last Y inversed second overhead symbols are located may indicate channel switching. The first node may perform channel switching when receiving the last Y inverse second overhead symbols.

If last X first overhead symbols in the at least one first overhead symbol received by the second node are inverse to other first overhead symbols used to carry the first ranging information, the last X inverse first overhead symbols may indicate channel switching, or a first radio frame in which the last X inverse first overhead symbols are located may indicate channel switching. When receiving the last Y inverse first overhead symbols, the second node may perform channel switching when sending of the second ranging frame is completed.

The foregoing Manner 1 and Manner 2 are used as examples, and do not constitute a limitation on this application. It should be noted that, when the timer in Manner 1 does not expire, and channel switching is indicated in Manner 2, channel switching may be directly performed in Manner 2, regardless of whether the timer expires.

A quantity of fourth ranging frames and/or a quantity of fifth ranging frames may be indicated by using second information. For example, the second information indicates the quantity of fourth ranging frames that are temporally continuously transmitted and/or the quantity of fifth ranging frames that are temporally continuously transmitted. On the frequency hopping channel, continuous transmission of ranging frames helps improve ranging accuracy and precision. The first node may send the second information to the second node, so that the second node receives the fourth ranging frame and/or sends the fifth ranging frame. The second information may be carried in the foregoing first configuration information or the foregoing third configuration information.

Further, a difference between a quantity of symbols that are included in the fourth ranging frame and that are used to carry the first ranging information and a quantity of symbols that are included in the first ranging frame and that are used to carry the first ranging information is less than a second threshold, and/or a difference between a quantity of symbols that are included in the fifth ranging frame and that are used to carry the second ranging information and a quantity of symbols that are included in the second ranging frame and that are used to carry the second ranging information is less than a second threshold, so that a same or similar SNR is kept on different channels. The difference may be an absolute value, and the second threshold may be 1; or the difference may be a relative value, and the second threshold may be ± 1. For example, if the fourth ranging frame is the ranging frame 1, and the first ranging frame is the ranging frame 4, the difference between the quantity of overhead symbols that are included in the ranging frame 4 and that are used to carry the ranging information 1 and the quantity of symbols that are included in the ranging frame 4 and that are used to carry the ranging information 1 is less than the second threshold.

Optionally, when frequency hopping is performed from the first channel to the second channel, before sending the ranging frame 1 or the ranging frame 2 to the second node, the first node sends preamble information to the second node, where the preamble information is used for re-timing and frequency synchronization between the first node and the second node. Before the second node sends the ranging frame 1 or the ranging frame 2 to the first node, whether the second node sends preamble information to the first node may be indicated by the preamble information sent by the first node to the second node.

Further, for a multicast communication manner, when frequency hopping is performed from the first channel to the second channel, the first node broadcasts preamble information before broadcasting the ranging frame 1 or the ranging frame 2, where the preamble information is used for re-timing and frequency synchronization between the first node and a plurality of second nodes. Optionally, the preamble information further indicates that a ranging interaction mode is multicast.

For example, for the multicast communication manner, that the ranging frame 1 is used on the second channel is used as an example. For ranging interaction between the first node and three second nodes, refer to FIG. 11-1. In FIG. 11-1, after TRF, the first node performs CCA and accesses the second channel. After sending preamble information, the first node sends the ranging frame 1 (carried by using all symbols in a radio frame #13). The three second nodes send ranging frames 1 based on a preset setting. For example, a ranging frame 1 sent by a second node 1 is carried by using all symbols in a radio frame #14, a ranging frame 1 sent by a second node 2 is carried by using all symbols in a radio frame #15, and a ranging frame 1 sent by a second node 3 is carried by using all symbols in a radio frame #16.

In the embodiment shown in FIG. 11, the second channel is the frequency hopping channel, frequency hopping increases the measurement bandwidth of frequency hopping ranging, and helps improve ranging accuracy and precision.

In the foregoing embodiments, a frame format of a radio frame is not specifically limited. A radio frame may be in a frame format in which an OFDM symbol parameter is preconfigured by a G node (a frame length may be less than 640×Ts), and a radio frame may include Q preconfigured OFDM symbols, where Q is a positive integer, and a value of Q may be configured based on an expected SNR. The preconfigured OFDM symbol parameters include at least one of the following: an OFDM symbol with a CP or without CP, an OFDM symbol with an extended CP or a normal CP, an OFDM symbol carrying a CSI-RS, an SRS, an FTS, an STS, or the like. When one radio frame includes a small quantity of OFDM symbols, a time length of a ranging frame may be reduced on a premise that ranging precision is met. This improves ranging efficiency, and reduces power consumption of a ranging node.

The foregoing describes in detail the methods provided in embodiments of this application. The following provides apparatuses for implementing any method in embodiments of this application. For example, an apparatus is provided, and includes units (or means) configured to implement steps performed by a node in any one of the foregoing methods.

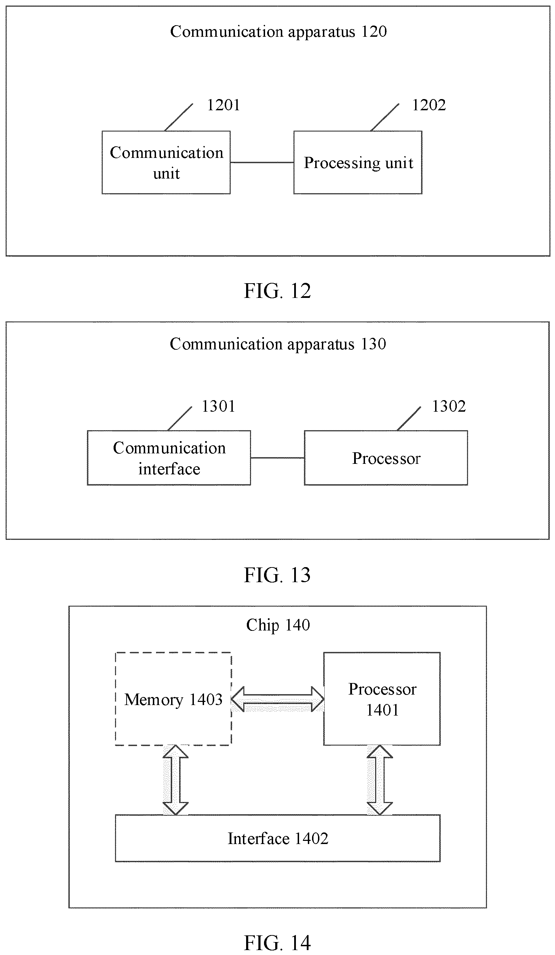

FIG. 12 is a diagram of a structure of a communication apparatus according to an embodiment of this application.

As shown in FIG. 12, the communication apparatus 120 may include a communication unit 1201 and a processing unit 1202. The communication unit 1201 and the processing unit 1202 may be software, hardware, or a combination of software and hardware.

The communication unit 1201 may implement a sending function and/or a receiving function, and the communication unit 1201 may also be described as a transceiver unit, an obtaining unit, or a sending unit. Alternatively, the communication unit 1201 may be a unit integrating an obtaining unit and a sending unit. The obtaining unit is configured to implement a receiving function, and the sending unit is configured to implement a sending function. Optionally, the communication unit 1201 may be configured to receive information sent by another apparatus, and may be configured to send information to the another apparatus.

In a possible design, the communication apparatus 120 may correspond to the first node in the foregoing method embodiment. For example, the communication apparatus 120 may be the first node, or may be a chip in the first node. The communication apparatus 120 may include units configured to perform operations performed by the first node in the foregoing method embodiment. In addition, the units in the communication apparatus 120 are separately used to implement the operations performed by the first node in the foregoing method embodiment. The units are described as follows.

The communication unit 1201 is configured to: send a first ranging frame on a first channel, where the first ranging frame carries first ranging information by using at least one first symbol; receive a second ranging frame from a second node on the first channel, where the second ranging frame carries second ranging information by using at least one second symbol; and receive first channel state information, where the first channel state information is channel state information that is from the second node and that corresponds to the first channel.

The processing unit 1202 is configured to: determine, based on the at least one second symbol, second channel state information corresponding to the first channel; and determine channel state information corresponding to the first channel based on the first channel state information and the second channel state information, where the channel state information corresponding to the first channel is used to measure a distance between a sender of the first ranging frame and the second node.

In a possible implementation, the first ranging frame includes at least one first radio frame, and the second ranging frame includes at least one second radio frame.

Optional manner 1: Symbols in the at least one first radio frame are all used to carry the first ranging information, symbols in the at least one second radio frame are all used to carry the second ranging information, there is a switching gap between a first radio frame and a second radio frame, and the switching gap is used to perform receive/transmit switching.

Optional manner 2: for any first radio frame of the at least one first radio frame, the first radio frame includes a switching gap, symbols except the switching gap are all used to carry the first ranging information, and the switching gap is temporally located after the symbols used to carry the first ranging information; and for any second radio frame of the at least one second radio frame, the second radio frame includes a switching gap, symbols except the switching gap are all used to carry the second ranging information, and the switching gap is temporally located after the symbols used to carry the second ranging information. The switching gap is used to perform receive/transmit switching.

Optional manner 3: for any first radio frame of the at least one first radio frame, the first radio frame includes a switching gap, a first overhead symbol, and a first link symbol, and the first overhead symbol and the first link symbol are used to carry the first ranging information; and for any second radio frame of the at least one second radio frame, the second radio frame includes a switching gap, a second overhead symbol, and a second link symbol, and the second overhead symbol and the second link symbol are used to carry the second ranging information. The switching gap is used to perform receive/transmit switching. The first link symbol and the second link symbol are used to carry information in different transmission directions.

Optionally, the communication unit 1201 is further configured to send a first bitmap, where the first bitmap indicates a first radio frame in one superframe.

Optionally, for a last first radio frame in the at least one first radio frame, last N symbols that are included in the last first radio frame and that are used to carry the first ranging information are inverse to other symbols that are in the last first radio frame and that are used to carry the first ranging information, the last first radio frame indicates channel switching, and N is a positive integer; and/or
for a last second radio frame in the at least one second radio frame, last M symbols that are included in the last second radio frame and that are used to carry the second ranging information are inverse to other symbols that are in the last second radio frame and that are used to carry the second ranging information, the last second radio frame indicates channel switching, and M is a positive integer.

In another possible implementation, the first ranging frame includes at least one first overhead symbol, the at least one first overhead symbol is all or part of overhead symbols in at least one first radio frame, and the at least one first overhead symbol is used to carry the first ranging information; and the second ranging frame includes at least one second overhead symbol, the at least one second overhead symbol is all or part of overhead symbols in at least one second radio frame, and the at least one second overhead symbol is used to carry the second ranging information.

Optionally, the at least one first overhead symbol is the part of overhead symbols in the at least one first radio frame, and at least one third overhead symbol in the at least one first radio frame is a first link system overhead symbol or a second link system overhead symbol; and the at least one second overhead symbol is the part of overhead symbols in the at least one second radio frame, and at least one fourth overhead symbol in the at least one second radio frame is a first link system overhead symbol or a second link system overhead symbol.

Optionally, on the first channel, a difference between a quantity of symbols that are in the first ranging frame and that are used to carry the first ranging information and a quantity of symbols that are in the second ranging frame and that are used to carry the second ranging information is less than a first threshold.

Optionally, the communication unit is further configured to send a second bitmap, where the second bitmap indicates an overhead symbol that is in one superframe and that is used to carry the first ranging information.

Optionally, last X first overhead symbols in the at least one first overhead symbol are inverse to other first overhead symbols used to carry the first ranging information, the last X inverse symbols indicate channel switching, and X is a positive integer; and/or
last Y second overhead symbols in the at least one second overhead symbol are inverse to other second overhead symbols used to carry the second ranging information, the last Y inverse second overhead symbols indicate channel switching, and Y is a positive integer.

Optionally, in one superframe, a number of a 1st first radio frame included in the first ranging frame is greater than K, overhead symbols in a 1st radio frame to a radio frame numbered K in the superframe are used to perform control information transmission, and K is a positive integer greater than 1.

In a possible implementation, the communication unit 1201 is further configured to receive P third ranging frames from P third nodes on the first channel, where the third ranging frame carries the second ranging information by using the at least one second symbol, a frame structure of the third ranging frame is the same as a frame structure of the second ranging frame, and P is a positive integer.

Further, an order of the P third ranging frames and the second ranging frame in time domain meets a preset setting.

In a possible implementation, the communication unit 1201 is further configured to: send a fourth ranging frame on a second channel based on first information indicating channel switching, where the fourth ranging frame carries the first ranging information by using the at least one first symbol, and a frame structure of the fourth ranging frame is the same as or different from a frame structure of the first ranging frame; receive a fifth ranging frame from the second node on the second channel, where the fifth ranging frame carries the second ranging information by using the at least one second symbol, and a frame structure of the fifth ranging frame is the same as the frame structure of the fourth ranging frame; and receive third channel state information, where the third channel state information is channel state information that is from the second node and that corresponds to the second channel.

The processing unit 1202 is further configured to: determine, based on the fifth ranging frame, fourth channel state information corresponding to the second channel; and determine channel state information corresponding to the second channel based on the third channel state information and the fourth channel state information, where the channel state information corresponding to the second channel is used to measure a distance between a sender of the fourth ranging frame and the second node.

Further, the processing unit 1202 is further configured to determine the distance between the sender of the first ranging frame and the second node based on the channel state information corresponding to the first channel and the channel state information corresponding to the second channel.

Optionally, the communication unit 1201 is further configured to: receive second information, where the second information indicates a quantity of fourth ranging frames that are temporally continuously transmitted and/or a quantity of fifth ranging frames that are temporally continuously transmitted.

Optionally, a difference between a quantity of symbols that are included in the fourth ranging frame and that are used to carry the first ranging information and a quantity of symbols that are included in the first ranging frame and that are used to carry the first ranging information is less than a second threshold, and/or a difference between a quantity of symbols that are included in the fifth ranging frame and that are used to carry the second ranging information and a quantity of symbols that are included in the second ranging frame and that are used to carry the second ranging information is less than a second threshold.

In another possible design, the communication apparatus 120 may correspond to the second node in the foregoing method embodiment. For example, the communication apparatus 120 may be the second node, or may be a chip in the second node. The communication apparatus 120 may include units configured to perform operations performed by the second node in the foregoing method embodiment. In addition, the units in the communication apparatus 120 are separately used to implement the operations performed by the second node in the foregoing method embodiment. The units are described as follows.

The communication unit 1201 is configured to: receive a first ranging frame from a first node on a first channel, where the first ranging frame carries first ranging information by using at least one first symbol; and send a second ranging frame to the first node on the first channel, where the second ranging frame carries second ranging information by using at least one second symbol.

The processing unit 1202 is configured to determine, based on the at least one first symbol, first channel state information corresponding to the first channel.

The communication unit 1201 is further configured to send the first channel state information to the first node, where the first channel state information is used to measure a distance between the first node and a receiver of the first ranging frame.

In a possible implementation, the communication unit 1201 is further configured to receive a first bitmap, where the first bitmap indicates a first radio frame in one superframe, and symbols in the first radio frame are all used to carry the first ranging information; or the first radio frame includes a switching gap, symbols except the switching gap are all used to carry the first ranging information, the switching gap is temporally located after the symbols used to carry the first ranging information, and the switching gap is used to perform receive/transmit switching.

In another possible implementation, the communication unit 1201 is further configured to receive a second bitmap, where the second bitmap indicates an overhead symbol that is in one superframe and that is used to carry the first ranging information.

Optionally, the communication unit 1201 is further configured to: receive a fourth ranging frame from the first node on a second channel based on first information, where the fourth ranging frame carries the first ranging information by using the at least one first symbol, a frame structure of the fourth ranging frame is the same as or different from a frame structure of the first ranging frame, and the first information indicates channel switching; and send a fifth ranging frame to the first node on the second channel, where the fifth ranging frame carries the second ranging information by using the at least one second symbol, and a frame structure of the fifth ranging frame is the same as the frame structure of the fourth ranging frame.

The processing unit 1202 is further configured to determine, based on the fifth ranging frame, third channel state information corresponding to the second channel.

The communication unit 1201 is further configured to send the third channel state information to the first node, where the third channel state information is used to measure a distance between the first node and a receiver of the fourth ranging frame.

Further, the communication unit 1201 is further configured to receive the distance between the first node and the receiver of the first ranging frame from the first node.

According to this embodiment of this application, the units in the apparatus shown in FIG. 12 may be separately or all combined into one or more other units, or one or more units in the apparatus may be split into a plurality of units with more detailed functions. This can implement a same operation without affecting implementation of technical effect of this embodiment of this application. The foregoing units are obtained through division based on logical functions. In actual application, a function of one unit may be implemented by a plurality of units, or functions of a plurality of units are implemented by one unit. In another embodiment of this application, a node may alternatively include another unit. In actual application, the functions may be implemented with assistance of the another unit, and may be implemented by a plurality of units in collaboration.

It should be noted that, for implementation of each unit, refer to corresponding descriptions in the method embodiments shown in FIG. 9, FIG. 10, and FIG. 12.

In the communication apparatus 120 described in FIG. 12, the ranging frame can be transmitted on the first channel between nodes by transmitting the ranging frame on the first channel. The ranging frame carries ranging information by using at least one symbol. This can perform transmission of the ranging information. The channel state information corresponding to the first channel can be determined based on the first channel state information and the second channel state information that correspond to the first channel. This implements ranging interaction on the first channel, and helps improve ranging precision.

FIG. 13 is a diagram of a structure of a communication apparatus according to an embodiment of this application.

It should be understood that the communication apparatus 130 shown in FIG. 13 is merely an example. The communication apparatus in embodiments of this application may further include another component, or include a component with a function similar to that of each component in FIG. 13, or does not necessarily need to include all components in FIG. 13.

The communication apparatus 130 includes a communication interface 1301 and at least one processor 1302.

The communication apparatus 130 may correspond to a first node or a second node. The communication interface 1301 is configured to receive and send information, and the at least one processor 1302 executes program instructions, so that the communication apparatus 130 implements a corresponding procedure of the method performed by a corresponding node in the foregoing method embodiment.

In a possible design, the communication apparatus 130 may correspond to the first node in the method embodiment shown in FIG. 3. For example, the communication apparatus 130 may be the first node, or may be a chip in the first node. The communication apparatus 130 may include components configured to perform operations performed by the first node in the foregoing method embodiments. In addition, each component in the communication apparatus 130 is separately configured to implement the operation performed by the first node in the foregoing method embodiments. For details, refer to corresponding descriptions of the first node in the method embodiments shown in FIG. 9, FIG. 10, and FIG. 11.

In another possible design, the communication apparatus 130 may correspond to the second node in the method embodiment shown in FIG. 3. For example, the communication apparatus 130 may be the second node, or may be a chip in the second node. The communication apparatus 130 may include components configured to perform operations performed by the second node in the foregoing method embodiments. In addition, each component in the communication apparatus 130 is separately configured to implement the operation performed by the second node in the foregoing method embodiments. For details, refer to corresponding descriptions of the second node in the method embodiments shown in FIG. 9, FIG. 10, and FIG. 11.

For a case in which the communication apparatus may be a chip or a chip system, refer to a diagram of a structure of a chip shown in FIG. 14.

As shown in FIG. 14, the chip 140 includes a processor 1401 and an interface 1402. There may be one or more processors 1401, and there may be a plurality of interfaces 1402. It should be noted that functions corresponding to the processor 1401 and the interface 1402 may be implemented by using a hardware design, or may be implemented by using a software design, or may be implemented by using a combination of software and hardware. This is not limited herein.

Optionally, the chip 140 may further include a memory 1403, and the memory 1403 is configured to store a necessary program instructions and necessary data.

In this application, the processor 1401 may be configured to invoke, from the memory 1403, a program for implementing the communication method by the first node or the second node provided in one or more embodiments of this application, and execute instructions included in the program. The interface 1402 may be configured to output an execution result of the processor 1401. In this application, the interface 1402 may be specifically configured to output each message or information of the processor 1401.

For the communication method provided in one or more embodiments of this application, refer to the embodiments shown in FIG. 9, FIG. 10, and FIG. 11. Details are not described herein again.

The processor in embodiments of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field-programmable gate array, FPGA), another programmable logic device, discrete gate or transistor logic device, a discrete hardware component, or the like. The general-purpose processor may be a microprocessor, or the processor may be any conventional processor, or the like.

The memory in embodiments of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the method provided in embodiments of this application, an embodiment of this application further provides a computer-readable storage medium. The computer-readable storage medium stores a computer program. When the computer program is run on one or more processors, the methods shown in FIG. 9, FIG. 10, and FIG. 11 may be implemented.

According to the method provided in embodiments of this application, an embodiment of this application further provides a computer program product. The computer program product includes a computer program. When the computer program is run on a processor, the methods shown in FIG. 9, FIG. 10, and FIG. 11 may be implemented.

An embodiment of this application provides a terminal device. The terminal device includes at least one of the communication apparatus 120, the communication apparatus 130, or the chip 140.

An embodiment of this application further provides a system. The system includes a terminal device and at least one of the communication apparatus 120, the communication apparatus 130, or the chip 140, configured to perform steps performed by corresponding nodes in any one of embodiments in FIG. 9, FIG. 10, and FIG. 11.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), a field programmable gate array (field programmable gate array, FPGA), another programmable logic device, discrete gate or transistor logic device, a discrete hardware component, may be a system on chip (system on chip, SoC), may be a central processing unit (central processor unit, CPU), may be a network processor (network processor, NP), or may be a digital signal processing circuit (digital signal processor, DSP), may be a microcontroller (micro controller unit, MCU), a programmable controller (programmable logic device, PLD), or another integrated chip. The processing apparatus may implement or perform the methods, the steps, and logical block diagrams that are disclosed in embodiments of this application. The general-purpose processor may be a microprocessor, or the processor may be any conventional processor, or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another appropriate type.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

The units in the foregoing apparatus embodiments totally correspond to the electronic devices in the method embodiments, and corresponding modules or units perform corresponding steps. For example, the communication unit (transceiver) performs receiving or sending steps in the method embodiments, and other steps except sending and receiving may be performed by the processing unit (processor). For a function of a specific unit, refer to a corresponding method embodiment. There may be one or more processors.

It may be understood that in embodiments of this application, the electronic device may perform some or all steps in embodiments of this application. These steps or operations are merely examples. In embodiments of this application, other operations or variations of various operations may be performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, like a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A ranging method, comprising:
sending a first ranging frame on a first channel, wherein the first ranging frame carries first ranging information by using at least one first symbol;
receiving a second ranging frame from a second node on the first channel, wherein the second ranging frame carries second ranging information by using at least one second symbol;
receiving first channel state information, wherein the first channel state information is channel state information that is from the second node and that corresponds to the first channel;
determining, based on the at least one second symbol, second channel state information corresponding to the first channel; and
determining channel state information corresponding to the first channel based on the first channel state information and the second channel state information, wherein the channel state information corresponding to the first channel is used to measure a distance between a sender of the first ranging frame and the second node.

2. The method according to claim 1, wherein the first ranging frame comprises at least one first radio frame, and the second ranging frame comprises at least one second radio frame.

3. The method according to claim 2, wherein symbols in the at least one first radio frame are all used to carry the first ranging information, symbols in the at least one second radio frame are all used to carry the second ranging information, there is a switching gap between a first radio frame and a second radio frame, and the switching gap is used to perform receive/transmit switching.

4. The method according to claim 2, wherein
for each first radio frame of the at least one first radio frame, the first radio frame comprises a switching gap, symbols except the switching gap are all used to carry the first ranging information, the switching gap is temporally located after the symbols used to carry the first ranging information, and the switching gap is used to perform receive/transmit switching; and
for each second radio frame of the at least one second radio frame, the second radio frame comprises a switching gap, symbols except the switching gap are all used to carry the second ranging information, the switching gap is temporally located after the symbols used to carry the second ranging information, and the switching gap is used to perform receive/transmit switching.

5. The method according to claim 2, wherein
for each first radio frame of the at least one first radio frame, the first radio frame comprises a switching gap, a first overhead symbol, and a first link symbol, the first overhead symbol and the first link symbol are used to carry the first ranging information, and the switching gap is used to perform receive/transmit switching; and
for each second radio frame of the at least one second radio frame, the second radio frame comprises a switching gap, a second overhead symbol, and a second link symbol, the second overhead symbol and the second link symbol are used to carry the second ranging information, and the switching gap is used to perform receive/transmit switching.

6. The method according to claim 5, wherein a quantity of switching gaps comprised in the first radio frame is 2 and/or a quantity of switching gaps comprised in the second radio frame is 2; and
the first radio frame further comprises at least one second link symbol, and/or the second radio frame further comprises at least one first link symbol, and the second link symbol and the first link symbol are used to carry information in different transmission directions.

7. The method according to any one of claims 2 to 6, wherein the method further comprises:
sending a first bitmap, wherein the first bitmap indicates the first radio frame in one superframe.

8. The method according to any one of claims 2 to 6, wherein
for a last first radio frame in the at least one first radio frame, last N symbols that are comprised in the last first radio frame and that are used to carry the first ranging information are inverse to other symbols that are in the last first radio frame and that are used to carry the first ranging information, the last first radio frame indicates channel switching, and N is a positive integer; and/or
for a last second radio frame in the at least one second radio frame, last M symbols that are comprised in the last second radio frame and that are used to carry the second ranging information are inverse to other symbols that are in the last second radio frame and that are used to carry the second ranging information, the last second radio frame indicates channel switching, and M is a positive integer.

9. The method according to claim 1, wherein
the first ranging frame comprises at least one first overhead symbol, the at least one first overhead symbol is all or part of overhead symbols in at least one first radio frame, and the at least one first overhead symbol is used to carry the first ranging information; and
the second ranging frame comprises at least one second overhead symbol, the at least one second overhead symbol is all or part of overhead symbols in at least one second radio frame, and the at least one second overhead symbol is used to carry the second ranging information.

10. The method according to claim 9, wherein
the at least one first overhead symbol is the part of overhead symbols in the at least one first radio frame, and at least one third overhead symbol in the at least one first radio frame is a first link system overhead symbol or a second link system overhead symbol; and
the at least one second overhead symbol is the part of overhead symbols in the at least one second radio frame, and at least one fourth overhead symbol in the at least one second radio frame is a first link system overhead symbol or a second link system overhead symbol.

11. The method according to claim 9, wherein on the first channel, a difference between a quantity of symbols that are in the first ranging frame and that are used to carry the first ranging information and a quantity of symbols that are in the second ranging frame and that are used to carry the second ranging information is less than a first threshold.

12. The method according to any one of claims 9 to 11, wherein the method further comprises:
sending a second bitmap, wherein the second bitmap indicates an overhead symbol that is in one superframe and that is used to carry the first ranging information.

13. The method according to claim 9 or 10, wherein
last X first overhead symbols in the at least one first overhead symbol are inverse to other first overhead symbols used to carry the first ranging information, the last X inverse first overhead symbols indicate channel switching, and X is a positive integer; and/or
last Y second overhead symbols in the at least one second overhead symbol are inverse to other second overhead symbols used to carry the second ranging information, the last Y inverse second overhead symbols indicate channel switching, and Y is a positive integer.

14. The method according to claim 9 or 10, wherein in one superframe, a number of a 1^{st} first radio frame comprised in the first ranging frame is greater than K, overhead symbols in a 1^{st} radio frame to a radio frame numbered K in the superframe are used to perform control information transmission, and K is a positive integer greater than 1.

15. The method according to any one of claims 1 to 14, wherein the method further comprises:
receiving P third ranging frames from P third nodes on the first channel, wherein the third ranging frame carries the second ranging information by using the at least one second symbol, a frame structure of the third ranging frame is the same as a frame structure of the second ranging frame, and P is a positive integer.

16. The method according to claim 15, wherein an order of the P third ranging frames and the second ranging frame in time domain meets a preset setting.

17. The method according to claim 1, wherein the method further comprises:
sending a fourth ranging frame on a second channel based on first information, wherein the fourth ranging frame carries the first ranging information by using the at least one first symbol, a frame structure of the fourth ranging frame is the same as or different from a frame structure of the first ranging frame, and the first information indicates channel switching;
receiving a fifth ranging frame from the second node on the second channel, wherein the fifth ranging frame carries the second ranging information by using the at least one second symbol, and a frame structure of the fifth ranging frame is the same as the frame structure of the fourth ranging frame;
receiving third channel state information, wherein the third channel state information is channel state information that is from the second node and that corresponds to the second channel;
determining, based on the fifth ranging frame, fourth channel state information corresponding to the second channel; and
determining channel state information corresponding to the second channel based on the third channel state information and the fourth channel state information, wherein the channel state information corresponding to the second channel is used to measure a distance between a sender of the fourth ranging frame and the second node.

18. The method according to claim 17, wherein the method further comprises:
determining the distance between the sender of the first ranging frame and the second node based on the channel state information corresponding to the first channel and the channel state information corresponding to the second channel.

19. The method according to claim 17, wherein the method further comprises:
sending second information, wherein the second information indicates a quantity of fourth ranging frames that are temporally continuously transmitted and/or a quantity of fifth ranging frames that are temporally continuously transmitted.

20. The method according to claim 18, wherein a difference between a quantity of symbols that are comprised in the fourth ranging frame and that are used to carry the first ranging information and a quantity of symbols that are comprised in the first ranging frame and that are used to carry the first ranging information is less than a second threshold, and/or a difference between a quantity of symbols that are comprised in the fifth ranging frame and that are used to carry the second ranging information and a quantity of symbols that are comprised in the second ranging frame and that are used to carry the second ranging information is less than a second threshold.

21. A ranging method, comprising:
receiving a first ranging frame from a first node on a first channel, wherein the first ranging frame carries first ranging information by using at least one first symbol;
sending a second ranging frame to the first node on the first channel, wherein the second ranging frame carries second ranging information by using at least one second symbol;
determining, based on the at least one first symbol, first channel state information corresponding to the first channel; and
sending the first channel state information to the first node, wherein the first channel state information is used to measure a distance between the first node and a receiver of the first ranging frame.

22. The method according to claim 21, wherein the method further comprises:
receiving a first bitmap, wherein the first bitmap indicates a first radio frame in one superframe, and symbols in the first radio frame are all used to carry the first ranging information; or the first radio frame comprises a switching gap, symbols except the switching gap are all used to carry the first ranging information, the switching gap is temporally located after the symbols used to carry the first ranging information, and the switching gap is used to perform receive/transmit switching.

23. The method according to claim 21, wherein the method further comprises:
receiving a second bitmap, wherein the second bitmap indicates an overhead symbol that is in one superframe and that is used to carry the first ranging information.

24. The method according to claim 21, wherein the method further comprises:
receiving a fourth ranging frame from the first node on a second channel based on first information, wherein the fourth ranging frame carries the first ranging information by using the at least one first symbol, a frame structure of the fourth ranging frame is the same as or different from a frame structure of the first ranging frame, and the first information indicates channel switching;
sending a fifth ranging frame to the first node on the second channel, wherein the fifth ranging frame carries the second ranging information by using the at least one second symbol, and a frame structure of the fifth ranging frame is the same as the frame structure of the fourth ranging frame;
determining, based on the fifth ranging frame, third channel state information corresponding to the second channel; and
sending the third channel state information to the first node, wherein the third channel state information is used to measure a distance between the first node and a receiver of the fourth ranging frame.

25. The method according to claim 24, wherein the method further comprises:
receiving, from the first node, the distance between the first node and the receiver of the first ranging frame.

26. A communication apparatus, wherein the communication apparatus comprises a communication unit and a processing unit;
the communication unit is configured to: send a first ranging frame on a first channel, wherein the first ranging frame carries first ranging information by using at least one first symbol; receive a second ranging frame from a second node on the first channel, wherein the second ranging frame carries second ranging information by using at least one second symbol; and receive first channel state information, wherein the first channel state information is channel state information that is from the second node and that corresponds to the first channel; and
the processing unit is configured to: determine, based on the at least one second symbol, second channel state information corresponding to the first channel; and determine channel state information corresponding to the first channel based on the first channel state information and the second channel state information, wherein the channel state information corresponding to the first channel is used to measure a distance between a sender of the first ranging frame and the second node.

27. A communication apparatus, wherein the communication apparatus comprises a communication unit and a processing unit;
the communication unit is configured to: receive a first ranging frame from a first node on a first channel, wherein the first ranging frame carries first ranging information by using at least one first symbol; and send a second ranging frame to the first node on the first channel, wherein the second ranging frame carries second ranging information by using at least one second symbol;
the processing unit is configured to determine, based on the at least one first symbol, first channel state information corresponding to the first channel; and
the communication unit is further configured to send the first channel state information to the first node, wherein the first channel state information is used to measure a distance between the first node and a receiver of the first ranging frame.

28. A communication apparatus, comprising a processor, wherein
when the processor invokes a computer program or instructions in a memory, the method according to any one of claims 1 to 20 is performed, or the method according to any one of claims 21 to 25 is performed.

29. A communication apparatus, comprising a logic circuit and a communication interface, wherein
the communication interface is configured to receive information or send information; and
the logic circuit is configured to receive information or send information through the communication interface, so that the method according to any one of claims 1 to 20 or the method according to any one of claims 21 to 25 is performed.

30. A terminal device, comprising the communication apparatus according to claim 26 or 27, or the communication apparatus according to claim 28, or the communication apparatus according to claim 29.

31. A computer-readable storage medium, wherein
the computer-readable storage medium is configured to store instructions or a computer program; and when the instructions or the computer program is executed, the method according to any one of claims 1 to 20 is implemented, or the method according to any one of claims 21 to 25 is implemented.

32. A computer program product, comprising instructions or a computer program, wherein
when the instructions or the computer program is executed, the method according to any one of claims 1 to 20 is implemented, or the method according to any one of claims 21 to 25 is implemented.
